(19) Europäisches Patentamt / European Patent Office / Office européen des brevets

(11) **EP 2 754 012 B1**

(12) **FASCICULE DE BREVET EUROPEEN**

(45) Date de publication et mention
de la délivrance du brevet:
**01.03.2017   Bulletin 2017/09**

(21) Numéro de dépôt: **12753500.3**

(22) Date de dépôt: **04.09.2012**

(51) Int Cl.:
*G06F 3/0346* [(2013.01)]   *G06F 3/0481* [(2013.01)]

(86) Numéro de dépôt international:
**PCT/EP2012/067156**

(87) Numéro de publication internationale:
**WO 2013/034529 (14.03.2013 Gazette 2013/11)**

(54) **PROCEDE DE CONTROLE D'UN CURSEUR PAR DES MESURES D'ATTITUDE D'UN POINTEUR ET POINTEUR METTANT EN OEUVRE LEDIT PROCEDE**

VERFAHREN ZUR STEUERUNG EINES CURSORS DURCH MESSUNG DER LAGE EINES ZEIGEGERÄTS UND ZEIGEGERÄT MIT DIESEM VERFAHREN

METHOD OF CONTROLLING A CURSOR BY MEASUREMENTS OF THE ATTITUDE OF A POINTER AND POINTER IMPLEMENTING SAID METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **09.09.2011   FR 1158041**

(43) Date de publication de la demande:
**16.07.2014   Bulletin 2014/29**

(73) Titulaire: **Movea**
**38000 Grenoble (FR)**

(72) Inventeurs:
• **YOUSSEF, Joe**
**F-38000 Grenoble (FR)**
• **AUJAY, Grégoire**
**F-38100 Grenoble (FR)**

(74) Mandataire: **Nguyen Van Yen, Christian**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 2 219 101      WO-A1-2009/156499**
**US-A- 5 880 733      US-A1- 2004 070 564**
**US-B1- 7 102 616**

**Description**

La présente invention se rapporte à un procédé de contrôle des mouvements et de l'orientation d'un curseur, sur une surface d'affichage, par exemple plane telle qu'un écran de téléviseur, un écran de PC, ... Le contrôle du déplacement d'un curseur sur une surface d'affichage non planaire de forme quelconque est également possible par le procédé et le dispositif de l'invention. Un assemblage d'écrans plats coordonnés peut par exemple constituer une surface non plane (sphère, cylindre, ...). La surface d'affichage est dotée d'un système métrique de coordonnées. Un utilisateur muni d'un pointeur instrumenté de moyens de mesure de mouvements et de boutons de commande peut ainsi par exemple contrôler, par le biais du déplacement dans l'espace 3D du pointeur instrumenté, le déplacement, et/ou la position et/ou l'orientation d'un curseur sur une surface d'affichage qui affiche une interface graphique d'une ou plusieurs applications logicielles. Le pointeur de commande peut ainsi déclencher l'exécution de fonctions programmées choisies par la position et/ou le déplacement et/ou l'orientation du pointeur et/ou par l'utilisation de commandes prévues à cet effet sur le pointeur.

Les dispositifs de cette nature ont vocation à se substituer aux télécommandes dans lesquelles les commandes ne permettent pas de contrôler de façon continue un curseur sur la surface d'affichage et consistent en une liste de codes associés aux boutons pressés par l'utilisateur qui sont transmis à l'équipement à commander via une liaison infrarouge ou plus récemment radioélectrique.

Un des premiers dispositifs de ce type a été divulgué par le brevet US 5,440,326. Dans ce dispositif, des gyroscopes procurent deux mesures de vitesses angulaires (en pitch et yaw) qui sont converties en commandes du curseur selon deux axes de la surface d'affichage. Ce type de dispositif présente cependant des limitations dans son ergonomie, car il n'est basé que sur la vitesse de rotation du pointeur selon 2 axes, mesurés dans le repère du pointeur, et pas sur l'orientation du dispositif dans le repère d'affichage. Par exemple, ces mesures sont sensibles à l'orientation selon laquelle le pointeur est tenu par l'utilisateur (le $3^{ème}$ angle, roll ou tilt, non mesuré). En effet, lorsque l'utilisateur tient la télécommande avec un angle de torsion du poignet (appelé roulis), verra le curseur se déplacer dans une direction non désirée. Par ailleurs, la limitation à deux axes de mesure rend complexe l'utilisation de la télécommande pour des angles importants et l'ergonomie du pointage en est alors affectée.

Pour lutter contre ces effets, une stabilisation des mesures peut être effectuée par des moyens mécaniques, les gyroscopes étant montés sur des cardans. Cependant, cette stabilisation mécanique est d'une part limitée à des petits angles de roll (butées mécaniques) et est imparfaite également en raison de l'inertie des cardans. En outre, une telle correction n'est pas applicable à des dispositifs miniatures.

Ces inconvénients peuvent dans une certaine mesure être surmontés par des dispositifs dans lesquels les mesures de vitesse de rotation en yaw et pitch fournies par des gyromètres miniatures sont corrigées de l'angle de roll par les mesures d'un accéléromètre en utilisant une matrice de rotation à deux dimensions. Des dispositifs de cette nature sont notamment divulgués par les brevets US 5,598,187 (Ide) et 7,158,118 (Liberty). Dans les dispositifs de cette nature, les différents angles doivent être effectivement calculés à partir des mesures de capteurs différents. Dans la demande internationale publiée sous le n° WO2009/156476 (Mathews) appartenant à la demanderesse de la présente demande, une correction est appliquée sans calcul préalable de l'angle de roll. La correction d'angle de roulis repose en fait sur un principe qui est fondamentalement imparfait dans la mesure ou l'accéléromètre est également sensible à l'accélération due au mouvement ce qui perturbe inévitablement l'estimation de l'angle de roulis et donne un effet imprécis sur la trajectoire du curseur sur la surface d'affichage. Enfin, certaines orientations du pointeur (proche vertical, par exemple) ne permettent plus de calculer l'angle de roulis, car celui-ci n'est plus mesuré par l'accéléromètre. La fonction de compensation de roulis introduit donc à cette occasion des défauts qui ne sont pas présents initialement dans l'ergonomie du contrôle du curseur par le mouvement.

Une manière de surmonter l'inconvénient d'une estimation séparée des angles a été divulguée par la demande internationale publiée sous le n° WO2009/156499, dont un des titulaires est le titulaire de la présente demande, dans laquelle on applique un filtre de Kalman étendu pour réaliser une estimation conjointe des variables d'état en utilisant un modèle d'état comprenant une équation différentielle du premier ordre. Cependant, la mise en oeuvre de ce filtrage est limitée à un seul mode de contrôle du mouvement du curseur en fonction du mouvement du pointeur et également gourmande en capacités de calcul.

La demande de brevet US2004/070564 divulgue un dispositif de pointage sur un écran qui calcule les déplacements d'un curseur sur ledit écran à partir des coordonnées de l'intersection d'un vecteur porté par le pointeur avec l'écran. Le brevet US7102616 divulgue un dispositif de pointage sur un écran instrumenté de sources en communication avec ledit pointeur qui calcule les déplacements du pointeur à partir de la vitesse angulaire du pointeur dans le repère de l'écran. Le brevet US5880733 décrit un moyen de représenter la profondeur d'un curseur qui se déplacerait dans un espace 3D, en figurant l'information de profondeur par la taille du curseur. Aucun de ces documents ne divulgue des modalités de projection de la position et/ou de l'orientation du pointeur sur le curseur qui soient paramétrables en fonction du contexte applicatif.

L'invention permet de surmonter les inconvénients de cet art antérieur en proposant une procédure de calcul des déplacements d'un curseur dans la surface d'affichage (ou pointée) à partir de mesures d'attitude du pointeur projetés sur une surface intermédiaire choisie, distincte de la surface d'affichage et, éventuellement, non plane.

A cet effet, l'invention procure un procédé de contrôle de premiers paramètres caractérisant un curseur sur une surface d'affichage à l'aide d'un pointeur mobile dans l'espace, lesdits premiers paramètres étant choisis dans un groupe comprenant uniquement les déplacements, la position et l'orientation dudit curseur, ledit procédé comprenant une étape de détermination d'au moins un deuxième paramètre d'un premier repère lié au pointeur, ledit au moins un deuxième paramètre étant choisi dans un groupe comprenant l'attitude, la position et la vitesse angulaire dudit premier repère dans un deuxième repère lié à la surface d'affichage, repère, un vecteur p étant lié audit premier repère, ledit procédé étant caractérisé en ce qu'il comprend en outre une étape de calcul desdits premiers paramètres en utilisant une ou plusieurs intersections de la droite portée par ledit vecteur p avec une surface de projection, ladite surface de projection étant distincte de la surface et choisie de manière à prédéterminer au moins une relation de transformation entre les premiers et deuxièmes paramètres définissant au moins un domaine de variation ou une amplitude de variation desdits premiers paramètres en fonction desdits deuxièmes paramètres, ladite au moins une relation de transformation dépendant du contexte d'utilisation, ladite étape de calcul recevant en entrée au moins une partie desdits deuxièmes paramètres.

Avantageusement, au moins une partie des premiers paramètres est calculée par une étape de description de la surface de projection établie par au moins une position d'un point appartenant au plan tangent à ladite surface au point d'intersection à cette surface au point d'intersection considéré.

Avantageusement, la description de la surface de projection varie en fonction de la translation du pointeur ou du contexte.

Avantageusement, la surface de projection appartient au groupe des surfaces planes, des surfaces cylindriques et des surfaces sphériques.

Avantageusement, la surface de projection est une surface plane verticale et en ce que l'on calcule une première coordonnée, respectivement un premier déplacement, du point comme étant égal(e), à une constante multiplicative près, à la tangente de l'angle de yaw du pointeur, respectivement à la différence des tangentes des angles de yaw du pointeur à la fin et au début dudit déplacement.

Avantageusement, la surface de projection est une surface plane verticale et on calcule une deuxième coordonnée, respectivement un deuxième déplacement, du point comme étant égal(e), à une constante multiplicative près, au rapport de la tangente de l'angle de pitch au cosinus de l'angle de yaw du pointeur, respectivement à la différence des rapports de la tangente de l'angle de pitch au cosinus de l'angle de yaw du pointeur à la fin et au début dudit déplacement.

Avantageusement, la surface de projection est une surface cylindrique verticale et on calcule une première coordonnée, respectivement un premier déplacement, du point comme étant égal(e), à une constante multiplicative près, à l'angle de yaw du pointeur en un point de la surface, respectivement à la différence des angles de yaw du pointeur à la fin et au début dudit déplacement.

Avantageusement, la surface de projection est une surface cylindrique verticale et on calcule une deuxième coordonnée, respectivement un deuxième déplacement, du point comme étant égal(e), à une constante multiplicative près, à la tangente de l'angle de pitch du pointeur en un point de la surface, respectivement à la différence des tangentes des angles de pitch du pointeur à la fin et au début dudit déplacement.

Avantageusement, la surface de projection est une surface sphérique centrée sur le pointeur et on calcule une première coordonnée, respectivement un premier déplacement, du point comme étant égal(e), à une constante multiplicative près, à l'angle de yaw multiplié par le cosinus de l'angle de pitch du pointeur en un point de la surface, respectivement à la différence des angles de yaw du pointeur à la fin et au début dudit déplacement multipliée par le cosinus de l'angle de pitch au début du déplacement.

Avantageusement, la surface de projection est une surface sphérique centrée sur le pointeur et on calcule une deuxième coordonnée, respectivement un deuxième déplacement du point comme étant égal(e), à une constante multiplicative près, à l'angle de pitch du pointeur en un point de la surface, respectivement à la différence des angles de pitch du pointeur à la fin et au début dudit déplacement.

Avantageusement, on calcule l'orientation du curseur en projetant selon p un vecteur perpendiculaire au vecteur p sur ladite suface.

Avantageusement, on calcule la rotation d'un vecteur perpendiculaire à p en projetant l'intégrale de la vitesse angulaire selon l'axe du pointeur ou à partir de son orientation.

Avantageusement, le calcul d'au moins une partie des premiers paramètres est effectué à partir de la vitesse angulaire du pointeur mesurée dans le repère du capteur et de l'attitude.

Avantageusement, le déplacement du curseur, à deux composantes, est calculé en effectuant la projection du vecteur vitesse angulaire du pointeur, dont la composante selon le vecteur p lié au pointeur est mise à zéro, et transformé dans le repère lié à la terre, sur les axes (Xe, Ye) du repère définissant la surface élémentaire pour la position et orientation courante du pointeur, et multiplié par des facteurs de gain.

Avantageusement, le déplacement du curseur, à deux composantes, est calculé en effectuant la projection du vecteur vitesse angulaire du pointeur exprimé dans le repère terrestre, sur les axes (Xe, Ye) du repère définissant une surface élémentaire plane et prise perpendiculaire au vecteur p défini par le pointeur et multiplié par des facteurs de gain

Avantageusement, le pointage est réalisé en mode absolu.

Avantageusement, le pointage est réalisé en mode relatif,

Avantageusement, le pointage est réalisé en mode relatif selon une direction et en mode absolu selon une autre direction.

L'invention procure également un système de contrôle de premiers paramètres caractérisant un curseur sur une surface d'affichage à l'aide d'un pointeur orienté dans l'espace vers ladite surface, lesdits premiers paramètres étant choisis dans un groupe comprenant uniquement les déplacements, la position et l'orientation dudit curseur, ledit système comprenant un module de détermination de deuxièmes paramètres d'un premier repère lié au pointeur, lesdits deuxièmes paramètres étant choisis dans un groupe comprenant l'attitude, la position et la vitesse angulaire dudit premier repère dans un repère dans un deuxième repère lié à la surface d'affichage; un vecteur p étant lié audit premier repère, ledit système étant caractérisé en ce qu'il comprend en outre un module de calcul desdits premiers paramètres en utilisant une ou plusieurs intersections de la droite portée par ledit vecteur p avec une surface de projection, ladite surface de projection étant distincte de la surface d'affichage et choisie de manière à prédéterminer au moins une relation de transformation entre les premiers et deuxièmes paramètres définissant au moins un domaine de variation ou une amplitude de variation desdits premiers paramètres en fonction desdits deuxièmes paramètres, ladite au moins une relation de transformation dépendant du contexte d'utilisation, ledit module de calcul recevant en entrée au moins une partie desdits deuxièmes paramètres.

Un des avantages de l'invention est de pouvoir être mise en oeuvre en utilisant des dispositifs très divers qui fournissent des mesures d'attitude (ou orientation) du pointeur.

L'invention permet de s'adapter à différents principes de mesure du mouvement du pointeur (ou de la télécommande) et fournit la possibilité de proposer différents modes, pour des usages et des objectifs ergonomiques différents.

De plus, l'invention propose des variantes qui permettent de prendre en compte des dispositifs qui délivrent les paramètres de position (en translation) du pointeur dans l'espace. Les paramètres d'affichage du curseur peuvent être déterminés en position (mode absolu) ou en déplacement (mode relatif).

En outre, le pointage peut être limité ou pas à un cône de délimité par des frontières de la surface d'affichage, et donc les déplacements du curseur limités à la surface d'affichage (contrôle en mode limité/glissant). Selon l'invention, ces modes de réalisation, peuvent être combinés selon le contexte applicatif et les informations de position et d'orientation du pointeur dont on dispose.

La présente invention sera mieux comprise à l'aide de la description qui va suivre et des dessins en annexe, sur lesquels :

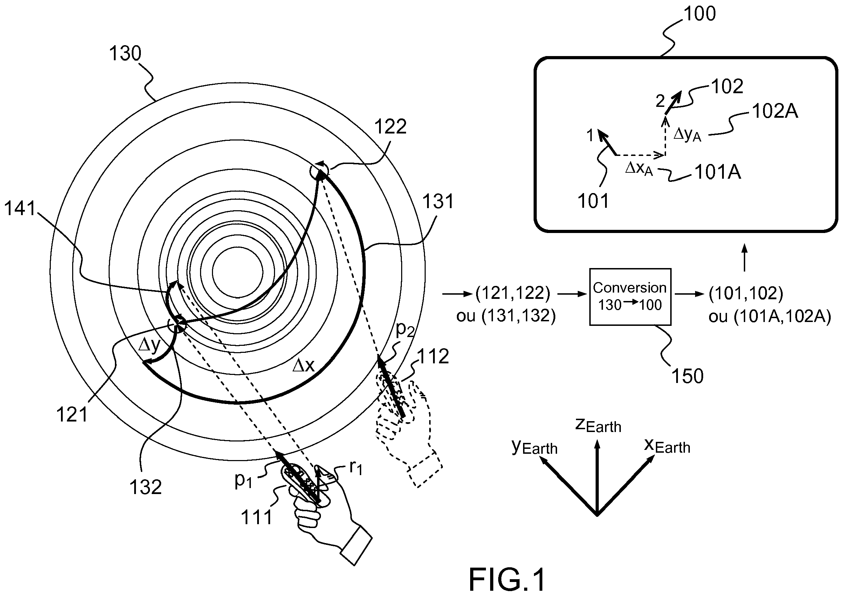

- La figure 1 représente un pointeur tenu par un utilisateur en vue de contrôler un curseur orienté sur une surface d'affichage qui est ici un écran plan, et une surface de projection avec les différents repères utilisés dans un mode de réalisation de l'invention ;

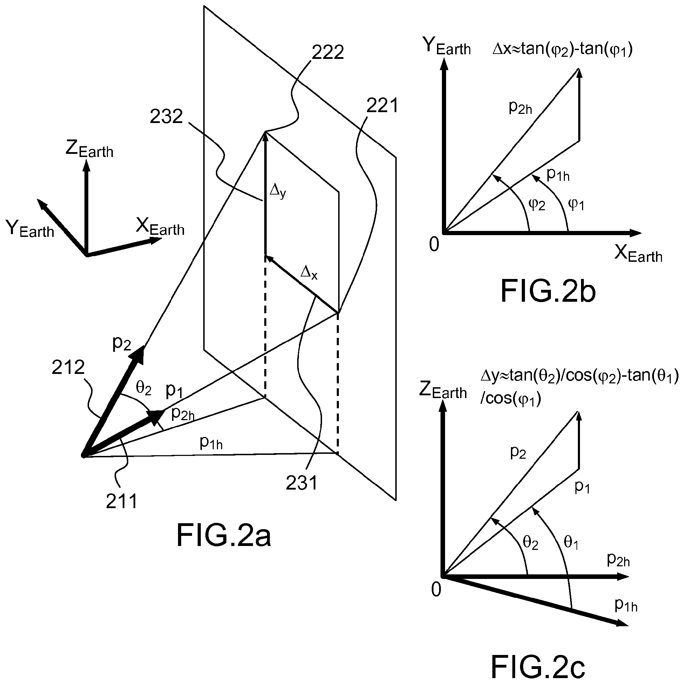

- les figures 2a, 2b et 2c représentent le principe de détermination des paramètres de déplacement ou de position d'un curseur à partir des angles de yaw et de pitch du vecteur directeur porté par un pointeur dans un repère de référence et en utilisant une surface de projection plane verticale, dans un mode de réalisation de l'invention;

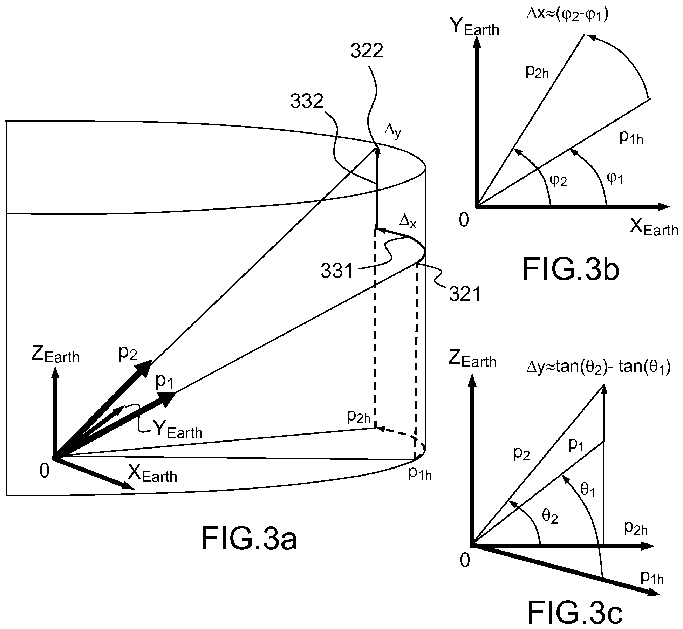

- les figures 3a, 3b et 3c représentent le principe de détermination des paramètres de déplacement ou de position d'un curseur à partir des angles de yaw et de pitch du vecteur directeur porté par un pointeur dans un repère de référence et en utilisant une surface de projection cylindrique, dans un mode de réalisation de l'invention ;

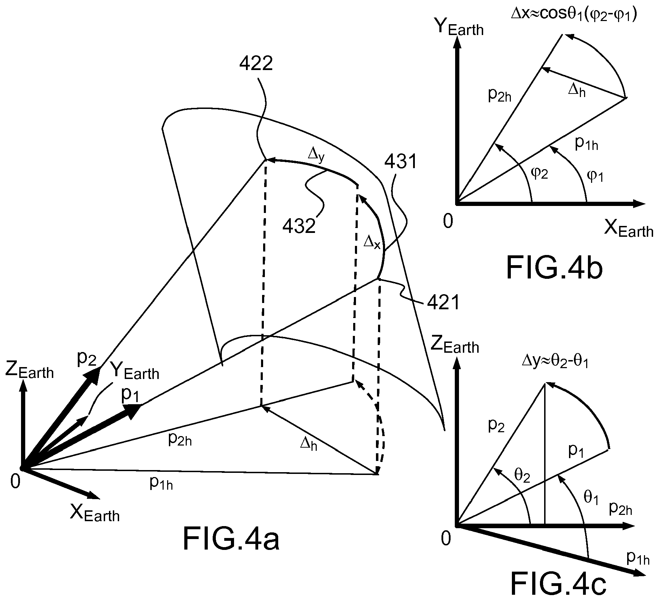

- les figures 4a, 4b et 4c représentent le principe de détermination des paramètres de déplacement ou de position d'un curseur à partir de des angles de yaw et de pitch du vecteur directeur porté par un pointeur dans un repère de référence et en utilisant une surface de projection sphérique dans un mode de réalisation de l'invention ;

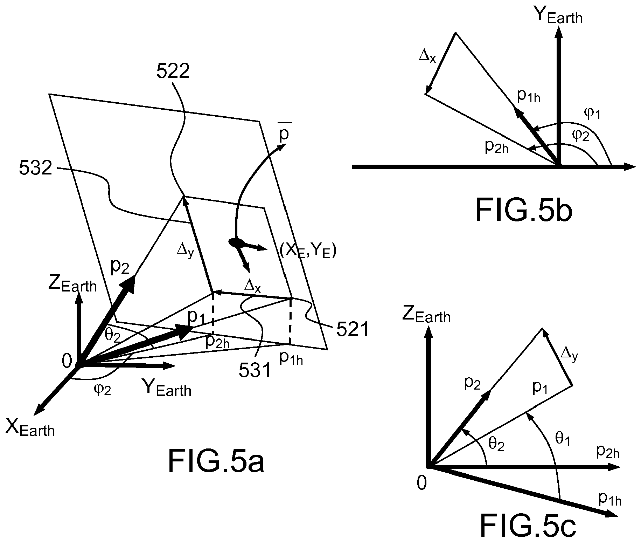

- les figures 5a, 5b et 5c représentent le principe de détermination des paramètres de déplacement ou de position d'un curseur à partir des des angles de yaw et de pitch du vecteur directeur porté par un pointeur dans un repère de référence en utilisant une surface de projection quelconque, dans un mode de réalisation de l'invention;

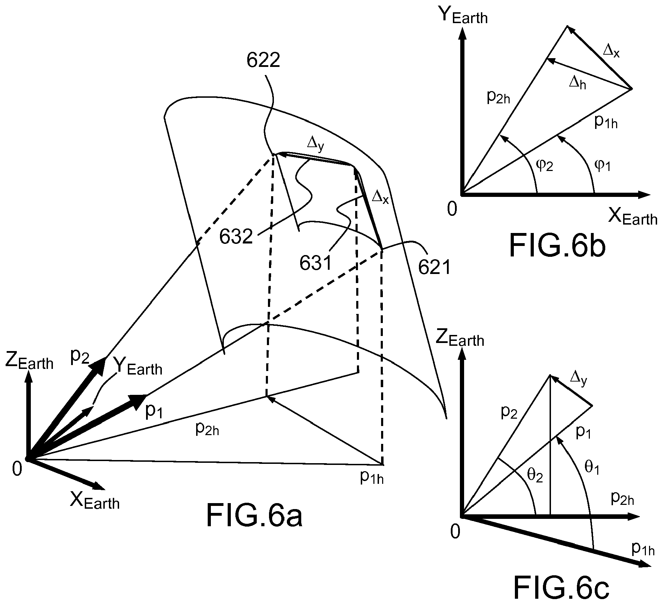

- les figures 6a, 6b et 6c représentent le principe de détermination des paramètres de déplacement ou de position d'un curseur à partir des angles de yaw et de pitch du vecteur directeur porté par un pointeur dans un repère de référence en approximant une surface de projection sphérique par une surface plane, selon une application du principe de la figure 5, dans un mode de réalisation de l'invention ;

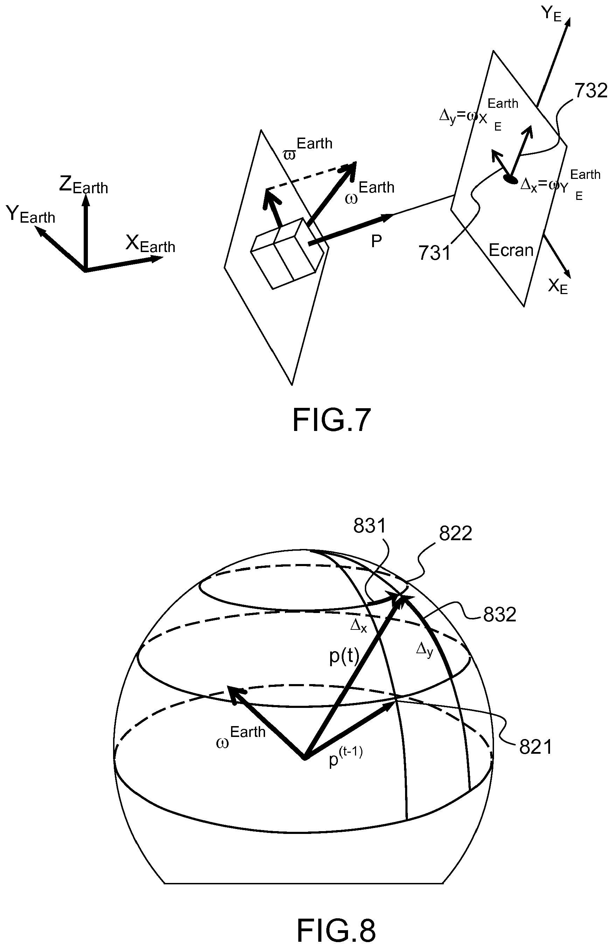

- la figure 7 représente le principe de détermination des paramètres de déplacement d'un curseur à partir de la vitesse angulaire d'un pointeur, en annulant l'effet de la vitesse de roulis du pointeur sur le déplacement du curseur, dans un mode de réalisation de l'invention ;
- la figure 8 représente le principe de détermination des paramètres de déplacement d'un curseur à partir de la vitesse angulaire d'un pointeur pour une surface de projection sphérique centrée sur l'origine du repère pointeur, dans un mode de réalisation de l'invention, ce qui annule l'effet de la vitesse de roulis sur le déplacement du curseur;

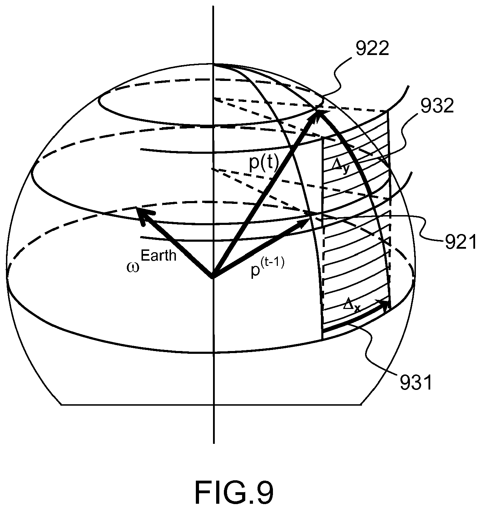

- la figure 9 représente la transformation des paramètres de déplacement d'un curseur à partir des résultats de issus d'une surface de projection sphérique de la figure 8 sur une autre surface dans un mode de réalisation de l'invention ; la surface choisie ici est un cylindre pour la composante $\Delta x$

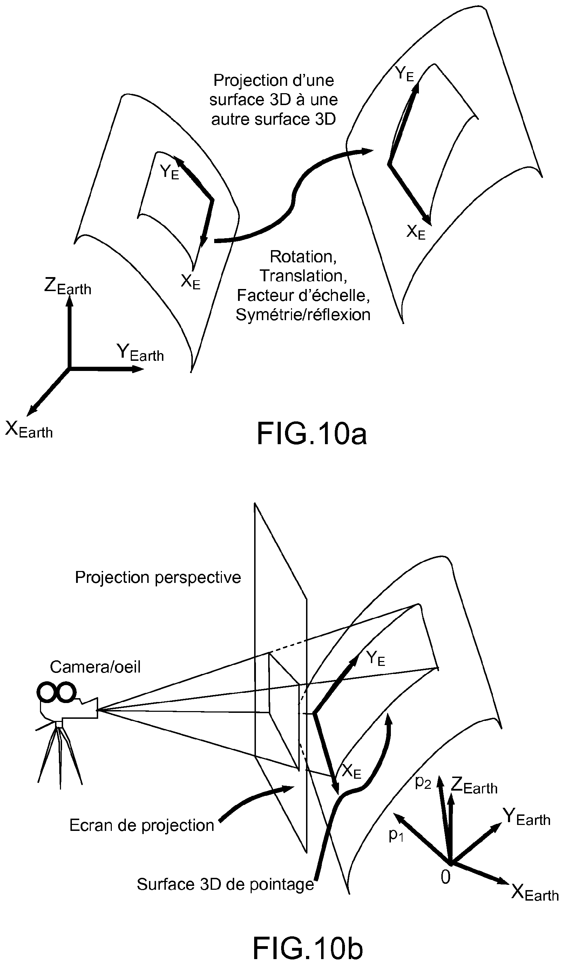

- les figures 10a et 10b illustrent le principe de transformation des déplacements ou de la position ou de l'orientation d'un curseur obtenu pour un premier type de surface de projection en déplacements ou position pour un second type de surface de projection dans un mode de réalisation de l'invention.

La figure 1 représente un pointeur tenu par un utilisateur en vue de contrôler le mouvement d'un curseur sur une surface d'affichage (100) qui est ici un écran avec les différents repères utilisés dans un mode de réalisation de l'invention.

Le but de l'invention est de fournir différentes méthodes de détermination des paramètres de position ou de déplacement du curseur 101, 102 dans un écran 100 piloté par un dispositif de pointage (ou pointeur) en position 111 ou 112, l'attitude (ou orientation) et/ou la position du pointeur étant connues dans un repère de référence lié à la surface d'affichage qui est généralement le repère de la terre ($X_{Earth}$, $Y_{Earth}$, $Z_{Earth}$). Le pointeur est un outil porté par l'utilisateur qui est positionné et orienté par l'utilisateur et qui lui permet de pointer une direction, et le curseur est le marquage du pointage sur un objet/écran, ou surface d'affichage.

Pour déterminer la position et l'orientation du curseur à l'écran d'après les mouvements imprimés au pointeur par l'utilisateur, le principe de l'invention introduit une surface de projection intermédiaire, 130, du «vecteur pointage » p1 (respectivement p2) porté par le pointeur, 111 (respectivement 112). Notons que la surface de projection 130 est différente de la surface d'affichage comme c'est illustré sur la figure 1. La surface de projection est décrite et connue dans le repère de référence lié à la surface d'affichage. Comme indiqué plus loin dans la description, le choix de la surface de projection est fonction de l'application et peut être choisie pour obtenir un rendu le plus ergonomique et adapté à l'application. Elle peut également changer en fonction du contexte d'utilisation et il est également possible d'utiliser plusieurs modèles de surfaces de projection selon les composantes du curseur. Le choix de cette surface de projection dépend également des informations disponibles parmi l'orientation et/ou la position du pointeur dans le repère de référence.

L'invention exploite la donnée d'orientation et/ou de position d'un pointeur mobile donnée(s) dans un repère de référence (ou souvent repère terrestre) pour calculer la position ou le déplacement ou l'orientation d'un curseur sur un écran d'affichage. Ce procédé permet par exemple de reproduire l'effet de déplacement d'un curseur généré par un pointeur laser, tout en permettant de piloter une application, par exemple par des menus contextuels de la position ou de l'orientation du curseur sur la surface d'affichage. Le choix de la surface de projection permet de modifier la relation entre le déplacement du pointeur mobile et le déplacement du curseur sur la surface d'affichage. Le repère de référence est lié à la surface d'affichage. La surface d'affichage étant généralement fixe dans le repère terrestre, ce repère de référence est donc généralement confondu avec le repère terrestre.

Le pointeur mobile est repéré dans le repère de référence à l'aide de moyens de mesure. Ces moyens fournissent l'orientation et/ou la position du pointeur dans ce repère. Pour une meilleure compréhension de l'invention, nous proposons de classifier les moyens de mesure en deux catégories. La première n'exploite que des moyens embarqués dans le pointeur mobile. On peut par exemple citer les capteurs de mouvement inertiels et magnétiques comme les accéléromètres, les magnétomètres, les gyromètres qui permettent, par combinaison, de fournir l'orientation, voire la position du pointeur dans le repère de référence. La seconde catégorie comprend les moyens qui nécessitent une instrumentation fixe dans le repère de référence. Par exemple, des moyens optiques, magnétiques ou électromagnétiques, des moyens sonores ou ultrasonores, des moyens radio permettent de localiser le pointeur mobile en position et/ou orientation dans le repère de référence et ils nécessitent une instrumentation du repère de référence

Le procédé peut être appliqué lorsque seules les données d'orientation du pointeur mobile sont disponibles, auquel cas, on supposera la position définie de façon arbitraire par rapport à la surface de projection. De même si seules des données de position sont connues, on pourra supposer l'orientation connue de façon arbitraire. Il est généralement plus simple et moins coûteux d'instrumenter le pointeur de façon à obtenir les mesures de son orientation, c'est ainsi un des modes préférés d'implémentation pour cette invention. La position du pointeur est alors définie de façon arbitraire.

On dote le repère du pointeur mobile par un vecteur p qui matérialise la direction du pointage. Le vecteur p de pointage est donc généralement défini fixe dans le repère du pointeur mobile de façon à ce que p soit dirigé dans la direction et le sens naturel (ergonomique) de pointage du pointeur mobile. L'orientation et/ou la position du repère du pointeur mobile dans le repère de référence permet également de fournir une seconde donnée d'orientation du pointeur mobile par la définition d'un second vecteur appartenant au plan perpendiculaire au vecteur p (par exemple noté r1 sur la figure 1, correspondant la position 111 du pointeur). Ce second vecteur d'orientation r1 permet le cas échéant de calculer une orientation du curseur sur la surface d'affichage.

Dans un mode dit « pointage absolu », on utilise directement les coordonnées du point 121 (pour le pointeur en position 111) ou 122 (pour le pointeur en position 112) dans la surface de projection et éventuellement une transformation (150) entre la surface de projection et la surface d'affichage pour obtenir les coordonnées du curseur dans la surface d'affichage. Ainsi, à une position/orientation physique du pointeur mobile dans le repère de référence correspond une et une seule position du curseur dans la surface d'affichage. On utilisera le même procédé pour l'orientation.

Le calcul de 121, 122 selon la donnée de la position et de l'orientation du pointeur mobile peut être réalisé analytiquement pour des modèles de surfaces simples et des hypothèses sur la position du pointeur mobile, comme il est détaillé ci-dessous. Le calcul de déplacement du curseur sur la surface d'affichage peut alors être directement mis en oeuvre par application de la formule analytique trouvée. Les calculs exposés permettent de couvrir beaucoup d'applications et d'ergonomies. Cependant on pourra également couvrir d'autres cas, avec d'autres surfaces de projections et/ou d'autres cas ou les données de positions et/ou orientation du pointeur mobile doivent être prises en compte. L'invention se généralise à ces autres cas. Si le calcul analytique est complexe ou impossible à mener, par exemple pour des surfaces complexes ou quelconques, on pourra utiliser des méthodes numériques de calcul d'intersection de droites avec des surfaces (méthodes de lancer de rayon par exemple). Le calcul numérique d'intersection du pointeur avec la surface peut alors être intégré dans le calcul de déplacement du curseur. On détaille également ci-dessous une méthode permettant de traiter les surfaces quelconques.

Les orientation/positions successives du pointeur mobile dans le temps (par exemple matérialisées par 111 et 112 comme des positions et orientation successives du pointeur dans le temps) sont ainsi transformées en positions/orientations du curseur à l'écran (101 correspond à 111, et 102 correspond à 112). Ce mode absolu est similaire à celui qui peut être mis en oeuvre par des tablettes graphiques, en mode « absolu » : à une position de la pointe du crayon sur la tablette correspond une position du curseur à l'écran.

Dans un mode dit « pointage relatif », la position du curseur à l'écran est pilotée par des données de déplacements successifs qui incrémentent sa position sur la surface d'affichage. Ce type de pointage est similaire à celui très généralement répandu dans les dispositifs de pointage de type souris pour ordinateur. Dans notre invention, le pointeur mobile prend des positions/orientations successives dans le temps. La figure 1 permet d'illustrer ce principe. Soit p1 et p2 les vecteurs directeurs associés au repère du pointeur mobile pour deux instants successifs . 121 et 122 sont les points projections de ces vecteurs p1 et p2 sur la surface de projection. Ils permettent de former un vecteur différence $(\Delta x, \Delta y)$ (noté 131, 132) dans le système métrique associé à la surface de projection. $(\Delta x, \Delta y)$ sont optionnellement transformés par une transformation 150 de la surface de projection vers la surface d'affichage et le résultat (101 A, 102A) est utilisé pour contrôler le déplacement $(\Delta x_A, \Delta y_A)$ du curseur sur la surface d'affichage.

En outre, deux modes de réalisation principaux de l'invention sont illustrés en détail dans la suite de la description:

- dans une première méthode explicitée ci dessus, on détermine la position ou le déplacement du curseur à partir de l'attitude et/ou la position du pointeur dans le repère de référence; l'attitude peut être donnée sous forme d'une matrice ou bien d'un quaternion d'attitude, ou de tout autre représentation de l'attitude du pointeur, par exemple les angles d'Euler ou des angles de cardan; la position peut être donnée par un vecteur définissant les coordonnées d'un point du pointeur dans le repère de référence ;
- dans une deuxième méthode, on détermine le déplacement du curseur à partir de la vitesse angulaire et/ou, de l'attitude du pointeur mobile; le déplacement du curseur sera une fonction de la vitesse angulaire et de l'attitude mesurée dans un repère lié à la terre ; plusieurs solutions sont exposées dans la suite de la description pour exploiter ce paramètre de vitesse angulaire dans un repère lié à la terre.

De plus, on peut contrôler l'orientation du curseur sur l'écran à l'aide des mouvements du pointeur, ce qui permet de lancer des fonctions différentes en fonction de cette orientation du curseur.

Comme illustré sur la figure 1, la projection du vecteur r1 perpendiculaire à p1 sur la surface de projection fournit un second vecteur 141. La direction du vecteur 141 ainsi formé dans la surface de projection (au sens de la métrique de la surface 130) permet de piloter l'orientation du curseur dans la surface d'affichage par la même transformation 150.

Le calcul de l'orientation du curseur sur l'écran peut par exemple être effectué de la manière suivante:

- le vecteur r1 est donné par exemple par la deuxième ou troisième colonne de la matrice d'attitude R du pointeur mobile (p1 étant défini par la première colonne), dont la définition est détaillée plus loin dans la description ;
- alors l'angle qui détermine l'orientation du curseur dans le repère de la surface de projection peut être calculé par :

$\varphi$= Atan(r'1.$Y_E$/r'1.$X_E$) où r'1 est la projection de r1 selon la direction de p1 à la surface de projection, « . » est l'opérateur de produit scalaire, $X_E$, $Y_E$ forment un repère sur la surface de projection comme détaillé plus bas en commentaire à la figure 5.

Le calcul d'orientation du curseur peut également être effectué par intégration de la vitesse angulaire mesurée sur un axe.

Plusieurs dispositifs physiques et types d'algorithmes peuvent être utilisés pour estimer l'attitude, la vitesse angulaire de l'attitude et/ou la position et/ou la translation du pointeur.

On peut tout d'abord utiliser des dispositifs inertiels embarqués sur le pointeur comprenant des combinaisons d'accéléromètres (A), de gyromètres (G) et de magnétomètres (M). Les accéléromètres et les magnétomètres permettent de mesurer l'orientation du pointeur par rapport à un vecteur fixe, respectivement, la gravité et le champ magnétique terrestre. Ils sont cependant affectés de perturbations (accélération propre et perturbations magnétiques ambiantes, respectivement) qui doivent être corrigées. Les gyromètres mesurent la vitesse angulaire propre des mouvements du pointeur. Les gyromètres sont généralement affectés d'une dérive temporelle significative qui doit être régulièrement corrigée. Ces capteurs peuvent être des Micro Electro Mechanical Systems (MEMS), éventuellement intégrés, ou réalisés dans d'autres technologies non intégrées. Chaque type de capteur peut comporter un, deux ou trois axes. Dans certaines applications, un seul type de capteur (dans ce cas à trois axes) peut être utilisé, si les perturbations ou la dérive temporelle peuvent être considérées comme négligeables pour que la donnée finale d'orientation, nécessaire à l'invention soit suffisamment précise, ou être corrigées sans recours à un autre type de capteur. De manière prévilégiée, on utilisera cependant une combinaison d'au moins deux types de capteurs, AG, MG ou AM.

Il faut noter que ces trois types de capteurs amènent des informations complémentaires en vue d'une meilleure estimation de l'orientation, notamment :

- Le gyromètre en version tri axes fournit des mesures de vitesse angulaire selon trois DDL (Degrés De Liberté) et permet d'estimer l'attitude par intégration de la vitesse angulaire. Il permet donc de calculer une orientation en relatif par rapport à une orientation donnée. Ce principe d'estimation de l'orientation est sujette à dérive à cause de l'opération d'intégration, si le gyromètre est utilisé seul ;
- L'accéléromètre triaxes fournit 2 informations angulaires absolues par rapport à un repère terrestre (roll et pitch), mais est sujet à perturbations lorsque les mouvements sont non quasi-statiques puisqu'il mesure en même temps les paramètres d'accélération due au mouvement;
- Le magnétomètre tri axes fournit 2 degrés de liberté angulaires absolues (qui sont des combinaisons du lacet ou yaw avec les autres angles de pitch et roll) par rapport à un repère terrestre mais est sujet aux perturbations magnétiques de l'environnement.

S'agissant des gyromètres, on peut par exemple utiliser les gyromètres fournis par Analog Devices™ de référence ADXRS300™, ou l'ITG3200™ de Invensense™ ou les gyromètres fournis par STM™

S'agissant des accéléromètres, on peut utiliser par exemple des accéléromètres de référence ADXL103 d'Analog Devices, LIS302DL de STM. FreeScale™, Kionix™ fournissent également de tels capteurs S'agissant des magnétomètres, on peut par exemple utiliser les magnétomètres de référence HMC1001™ ou HMC1052 ou HMC1053 de la société Honeywell™. AKM™ fournit également des micromagnétomètres (AK8973, AK8974, AK8976).

Différents algorithmes peuvent être utilisés pour corriger les perturbations et fusionner les signaux des différents types de capteurs et estimer l'attitude, par exemple ceux divulgués par la demande internationale publiée sous le n° WO2010/007160 dont un des titulaires est le titulaire de la présente demande.

S'agissant des modules de calcul de l'orientation à partir de ces types de capteurs, on pourra se référer aux produits de la société Movea™ ou des produits de la sté XSens™, ou Intersense™ avec par exemple la famille des produits InertiaCube™.

A partir des systèmes fondés sur des capteurs inertiels embarqués dans le pointeur mobile, il est également possible d'estimer la trajectoire et donc une position relative à un point de départ arbitraire du pointeur.

Le traitement des mesures d'orientation et/ou de position pour le calcul de la position du curseur est effectué dans un module de calcul. Le calcul peut être embarqué dans le pointeur mobile ou déporté sur le calculateur lié à la surface d'affichage (par exemple un PC ou une SetTopBox). On peut citer pour les microprocesseurs, par exemple un DSP Texas Instruments™ TMS320VC5509™ pour les applications les plus exigeantes en temps de calcul, ou un microcontrôleur 32 bits à coeur ARM™, par exemple un de ceux de la famille STR9™, notamment le STR9F12FAW32™ de STM. Le module de calcul comprend également de préférence une mémoire flash nécessaire au stockage du code à exécuter et des données permanentes qui lui sont nécessaires et une mémoire dynamique de travail.

Les signaux issus des capteurs ou traités à bord du pointeur mobile sont transmis à un autre microprocesseur, généralement celui qui exécute l'application et gère la surface d'affichage. L'application est commandée par le curseur dont les déplacements sont contrôlés par le pointeur. La transmission peut s'opérer par voie radiofréquence avec une forme d'onde et un protocole Bluetooth ou avec une forme d'onde et un protocole Wi-Fi (Norme 802.11 g) ou selon la norme RF4CE. La transmission peut également s'effectuer par voie infra-rouge. Les traitements peuvent être répartis de manière variable entre le microprocesseur de la plateforme applicative et/ou le microcontrôleur embarqué dans le pointeur.

Pour estimer la position, l'attitude ou la vitesse angulaire de l'orientation, il est également possible d'utiliser d'autres systèmes, tels que ceux cités ci-dessous :

- Systèmes optiques comprenant des Light Emitting Diodes (LED), d'autres marqueurs ou des capteurs infrarouges ; des systèmes de ce type sont commercialisés sous les marques CodaMotion™ ou Vicon™; dans de tels systèmes, l'algorithmie permettant d'estimer l'attitude ou la vitesse angulaire de l'orientation peut notamment utiliser la puissance du signal détecté, l'angle d'arrivée ou sa phase ;
- Systèmes magnétiques comprenant des sources magnétiques localisées extérieures au pointeur, dans l'environnement de l'écran, ledit pointeur étant instrumenté avec un magnétomètre adapté aux sources magnétiques ;on pourra se référer aux dispositifs des sociétés Ascencion Technology™ ou Polhemus™ ;
- Systèmes à ultrasons comprenant un ou plusieurs émetteurs/récepteurs d'ultrasons, le ou les émetteurs étant embarqués sur le pointeur et le récepteur étant fixé sur l'écran ; l'algorithmie permettant d'estimer l'attitude ou la vitesse angulaire de l'orientation peut notamment utiliser une corrélation et une décorrélation des ondes sonores reçues par les récepteurs (par exemple le IS-900 System de chez Intersense);
- Systèmes à ondes radiofréquences comprenant un ou plusieurs émetteurs/récepteurs d'ondes radiofréquences, le ou les émetteurs étant embarqués sur le pointeur et le récepteur étant fixé sur ou dans le voisinage de l'écran ou le contraire; ces émetteurs/récepteurs peuvent notamment être du type UWB (Ultra Wide Band) ; l'algorithmie permettant d'estimer l'attitude ou la vitesse angulaire de l'orientation peut notamment utiliser une fusion des signaux correspondant aux angles d'arrivée, à l'amplitude des signaux reçus et à leur temps d'arrivée ou à leur phase;
- Systèmes vidéo comprenant une ou plusieurs caméras vidéo implantées sur ou dans le voisinage de l'écran ; l'algorithmie permettant d'estimer l'attitude ou la vitesse angulaire de l'orientation peut notamment utiliser une analyse et un traitement des images de mouvement du pointeur prélevées par les caméras vidéo.

Les figures 2a, 2b et 2c représentent la transformation des angles de yaw et de pitch d'un pointeur en position ou déplacement d'un curseur, en choisissant comme surface de projection une surface plane verticale, dans un mode de réalisation de l'invention.

Sur la figure, on suppose que la position du pointeur est fixée arbitrairement. Dans le cas général elle peut néanmoins être variable dans le temps. Cette illustration correspond au cas, par exemple où l'on dispose d'une mesure d'orientation, sans la mesure de position.. Seule l'orientation du pointeur mobile est mesurée. Le principe exposé reste applicable pour une position de pointeur variable mesurée et non fixée arbitrairement.

Dans le mode illustré sur la figure 2, la position du curseur sur la surface d'affichage est calculée de la manière suivante : on calcule l'intersection de la droite portée par le vecteur p (p1, p2 par exemple) lié au pointeur avec la surface de projection qui est ici une surface plane. Le vecteur directeur de la droite est le vecteur p1, 211 (respectivement p2, 212). L'intersection de la droite avec la surface de projection est matérialisée par les points 221 et 222 pour les deux vecteurs directeurs p1 et p2 correspondant à deux orientations successives du pointeur mobile.

Soit la matrice de rotation R (ou le quaternion q) qui définit l'attitude du pointeur relativement à un repère lié à la terre, qui est pris ici comme repère de référence, « Earth Frame ». R est fournie par le dispositif de mesure d'orientation du pointeur mobile.

Soit le vecteur pointeur 3D, p = $[p_x\,p_y\,p_z]^T$ avec //p//=1. Par souci de simplification et par convention, on suppose ici que p est confondu avec le vecteur x du repère lié au pointeur, cette définition étant non restrictive et pouvant être remplacée par une autre définition adéquate, à la portée de l'homme de l'art. Relativement à l'Earth Frame, p est alors la première colonne de la matrice R.

Soit ($\Delta x, \Delta y$), 231, 232, le déplacement du point d'intersection de 221 à 222 sur la surface de projection (ici un plan vertical) lorsque le pointeur est déplacé de l'orientation p1 à l'orientation p2. Par souci de simplification, sans restreindre la généralité, on prendra dans cette illustration une transformation identité entre le déplacement du curseur sur la surface d'affichage qu'on doit déterminer et le déplacement du point d'intersection sur la surface de projection. En général, $\Delta x$ est horizontal et $\Delta y$ est dans un plan vertical ;

Dans le cas général (lorsque la surface de projection n'est pas plane), $\Delta x$ et $\Delta y$ ne sont pas forcément des segments droits mais peuvent être des distances curviligne sur des éléments de courbe (par exemple, l'arc d'un cercle).

Soit les deux angles : $\varphi$ (yaw) et $\theta$ (pitch) qui sont liés à p

- $\varphi = \mathrm{atan}\,(p_y/p_x)\;]-\pi,\pi[$
- $\theta = \mathrm{atan}(p_z/sqrt(p_x^2 + p_y^2)\,)\;]-\pi/2,\,\pi/2[$

Sur les figures 2a, 2b et 2c est illustré le différentiel sur chaque surface en fonction d'un déplacement élémentaire selon le yaw ($\varphi_1 \rightarrow \varphi_2$) et selon le pitch ($\theta_1 \rightarrow \theta_2$). $\Phi$ et $\theta$ peuvent être déterminés à partir de p = $[p_x\,p_y\,p_z]^T$ comme indiqué ci-dessus.

On peut calculer les déplacements $\Delta x$ et $\Delta y$ par les formules suivantes :

- $\Delta X = G\,(\tan(\varphi_2) - \tan(\varphi_1))$

- $\Delta Y = G\left(\dfrac{\tan(\theta_2)}{\cos(\varphi_2)} - \dfrac{\tan(\theta_1)}{\cos(\varphi_1)}\right)$

Lorsque le yaw ou le pitch se rapprochent de $\pm\pi/2$ le déplacement du curseur augmente en absolu et tend vers l'infini.

G est une constante qui dépend de la distance entre le pointeur et le plan et est donc liée à la position arbitraire donnée au pointeur. Il permet de régler la proportion entre le déplacement angulaire du pointeur et le déplacement du curseur.

Les figures 3a, 3b et 3c représentent une étape de la transformation des angles de yaw et de pitch d'un pointeur en mouvement d'un curseur pour une surface de projection cylindrique, dans un mode de réalisation de l'invention.

Sur la figure, on suppose que la position du pointeur est fixée arbitrairement. Dans le cas général elle peut néanmoins être variable dans le temps. Cette illustration correspond par exemple au cas où l'on dispose d'une mesure d'orientation, sans la mesure de position.. Seule l'orientation du pointeur mobile est mesurée. Le principe exposé reste applicable pour une position de pointeur variable mesurée et non fixée arbitrairement.

.On supposera par souci de simplicité que la position du pointeur est arbitrairement fixée sur l'axe du cylindre. Il sera aisé de généraliser l'invention au cas d'un pointeur mobile en position, le principe restant le même. Dans les conditions exposées, il est possible de mener le calcul analytiquement.

Le déplacement du curseur selon l'horizontale $\Delta x$, 331 est proportionnel à la rotation du pointeur mobile selon le yaw. On peut calculer les déplacements $\Delta x$ et $\Delta y$, 331, 332, avec les formules suivantes :

- $\Delta X = G\,(\varphi_2 - \varphi_1)$
- $\Delta Y = G(\tan(\theta_2) - \tan(\theta_1))$

Le déplacement du curseur selon la verticale $\Delta y$, 332, augmente en absolu et tend vers l'infini lorsque le pitch se rapproche de $\pm\pi/2$.

Dans ce cas, $\Delta x$, 331, est bien une longueur curviligne. L'hypothèse ici est que le pointeur est placé au centre du cylindre. G est égal à la distance entre le pointeur et le cylindre, soit égal au rayon du cylindre.

Les figures 4a, 4b et 4c représentent la transformation des angles de yaw et de pitch d'un pointeur en mouvement d'un curseur pour une surface de projection sphérique dans un mode de réalisation de l'invention.

Sur la figure, on suppose que la position du pointeur est fixée arbitrairement. Dans le cas général elle peut néanmoins être variable dans le temps. Cette illustration correspond par exemple au cas où l'on dispose d'une mesure d'orientation, sans la mesure de position.. Seule l'orientation du pointeur mobile est mesurée. Le principe exposé reste applicable pour une position de pointeur variable mesurée et non fixée arbitrairement.

On supposera par souci de simplicité que la position du pointeur est fixe, placé au centre de la sphère. Il sera aisé de généraliser l'invention au cas d'un pointeur mobile en position, le principe de calcul restant le même.

Le déplacement du curseur selon l'horizontale $\Delta x$, 431, est proportionnel à la rotation selon le yaw et diminue et tend vers zéro lorsque le pitch se rapproche de $\pm\pi/2$. Le déplacement du curseur selon la verticale $\Delta y$, 432, est proportionnel au pitch. On peut calculer les déplacements $\Delta x$ et $\Delta y$, 431, 432, avec les formules suivantes :

- $\Delta X = G\,(\varphi_2 - \varphi_1)\cos(\theta_1)$
- $\Delta Y = -G(\theta_2 - \theta_1)$

Dans ce cas, $\Delta x$, 431, et $\Delta y$, 432, sont toutes deux des longueurs curvilignes. L'hypothèse ici est que le pointeur est placé au centre de la sphère. G est égal à la distance entre le pointeur et la sphère, soit égal au rayon de la sphère.

Les figures 5a, 5b et 5c représentent la transformation des angles de yaw et de pitch d'un pointeur en mouvement d'un curseur pour une une surface de projection quelconque approximée par de petits éléments plans dans un mode de réalisation de l'invention.

La surface quelconque est approximée pour chaque position/orientation du pointeur par une petite surface plane pour laquelle les figures 5a, 5b et 5c présentent le principe de détermination de la position ou de déplacement du curseur.

Pour calculer la position du curseur, on calcule l'intersection d'une ligne droite portée par le vecteur p avec la surface de projection. On considère alors une surface élémentaire définie par le repère $(X_E, Y_E)$, où :

- $X_E$ est horizontal (càd $X_E$ // Plan($X_{Earth}$, $Y_{Earth}$)) ; cela se traduit par le fait que la composante selon $Z_{Earth}$ est nulle, d'où $X_E = [\cos(\alpha)\ \sin(\alpha)\ 0]^T$;
- $Y_E$ est dans un plan vertical et perpendiculaire à $X_E$; cela se traduit par le fait que la composante selon $(X_{Earth},$

$Y_{Earth}$) est perpendiculaire à $X_E$, d'où $Y_E$ = [-cos(β)sin(α) cos(β)cos(α) -sin(β)]$^T$.

Pour avoir $Y_E$ vers le bas il faut que -π/2<β≤π/2.
On peut calculer les déplacements Δx et Δy, 531, 532, avec les formules suivantes :

$$\Delta X = \frac{(\vec{n}.\bar{p}) \cdot (p_1 \wedge p_2 . Y_E)}{(\vec{n} \cdot p_1)(\vec{n} \cdot p_2)}$$

$$\Delta Y = -\frac{(\vec{n}.\bar{p}) \cdot (p_1 \wedge p_2 . X_E)}{(\vec{n} \cdot p_1)(\vec{n} \cdot p_2)}$$

Où :

- Comme indiqué plus haut, $p_1$ et $p_2$ sont les vecteurs définis aux deux orientations successives du pointeur ;
- $\vec{n}$ = $X_E \wedge Y_E$ est le vecteur normal à la surface pointée ;
- $\bar{p}$ = $[\bar{p}_x\ \bar{p}_y\ \bar{p}_z]^T$ est un point appartenant à cette surface élémentaire (par ex. $\bar{p}$ = k$p_1$) ;
- « $\wedge$ » et « . » représentent respectivement les opérateurs de produit vectoriel et de produit scalaire.

On détaille ci-dessous, à titre d'exemple de réalisation du principe de surface de projection quelconque précédent, les calculs dans le cas d'une surface de projection plane verticale perpendiculaire à $X_{Earth}$ ($\bar{p}$ = k$p_1$, α = π/2 et β= π/2).
Soit alors $X_E$ = [0 1 0]$^T$ et $Y_E$ = [0 0 -1]$^T$

- $\Delta X = \frac{G}{p_{x1}p_{x2}}\left(p_{x1}p_{y2} - p_{x2}p_{y1}\right) = G\left(\tan(\varphi_2) - \tan(\varphi_1)\right)$, $p_{x1} > 0\ et\ p_{x2} > 0$

- $\Delta Y = \frac{-G}{p_{x1}p_{x2}}\left(p_{x1}p_{z2} - p_{x2}p_{z1}\right) = G\left(\frac{\tan(\theta_2)}{\cos(\varphi_2)} - \frac{\tan(\theta_1)}{\cos(\varphi_1)}\right)$, $p_{x1} > 0\ et\ p_{x2} > 0$

On retrouve ainsi le cas illustré par les figures 2a, 2b et 2c et les mêmes formules.
On détaille également à titre d'exemple de réalisation du principe de surface de projection quelconque précédent le cas d'une surface élémentaire plane d'un cylindre vertical selon l'axe $Z_{Earth}$.

Pour : $\bar{p} = k\left[p_{x1}\ p_{y1}\ 0\right]^T / \sqrt{p_{x1}^2 + p_{y1}^2}$, α -π/2+φ et β= π/2 (on utilisera l'approximation $p_1.p_2 \rightarrow 1$ pour le cas de petits déplacements)

Soit alors $X_E = \left[-\bar{p}_y\ \bar{p}_x\ 0\right]^T / \sqrt{\bar{p}_x^2 + \bar{p}_y^2}$ et $Y_E$ = [0 0 -1]$^T$

- $\Delta X = \frac{G}{p_{x1}p_{x2}+p_{y1}p_{y2}}\left(p_{x1}p_{y2} - p_{x2}p_{y1}\right) \sim G\sin(\varphi_2 - \varphi_2) \sim G\left(\varphi_2 - \varphi_2\right)$

- $\Delta Y = \frac{-G[p_{z2}(p_{x1}^2+p_{y1}^2)-p_{z1}(p_{x1}p_{x2}+p_{y1}p_{y2})]}{(p_{x1}p_{x2}+p_{y1}p_{y2})\sqrt{p_{x1}^2+p_{y1}^2}} \sim \frac{-G[p_{z2}-p_{z1}]}{\sqrt{p_{x1}^2+p_{y1}^2}} = -G\left(\tan(\theta_2) - \right.$

- $\left.\tan(\theta_1)\right)$

Dans le cadre de l'approximation de petits déplacements ($p_1.p_2 \rightarrow 1$), on retrouve le cas illustré par les figures 3a, 3b et 3c.
Les figures 6a, 6b et 6c représentent la transformation des angles de yaw et de pitch d'un pointeur en mouvement d'un curseur sur une surface sphérique approximée par des surfaces planes dans un mode de réalisation de l'invention.
Pour : $\bar{p}$ = k$p_1$, α = π/2+φ et β= π/2 (on utilisera l'approximation $p_1.p_2 \rightarrow 1$ pour le cas de petits déplacements).

Soit alors $X_E$ = Normalized([-$\bar{p}_y\bar{p}_x$0]$^T$) et $Y_E = Normalized\left(\left[\bar{p}_x\bar{p}_z\quad \bar{p}_y\bar{p}_z\quad -(\bar{p}_x^2 + \bar{p}_y^2)\right]^T\right)$
On peut calculer les déplacements Δx et Δy, 631, 632, avec les formules suivantes :

$$\Delta X = \frac{G\,(p_{x1}p_{y2}-p_{x2}p_{y1})}{(p_{x1}p_{x2}+p_{y1}p_{y2}+p_{z1}p_{z2})\sqrt{p_{x1}^2+p_{y1}^2}} \sim \frac{G\,(p_{x1}p_{y2}-p_{x2}p_{y1})}{\sqrt{p_{x1}^2+p_{y1}^2}} =$$

$$G\,\cos(\theta_1)\,\sin(\varphi_2-\varphi_1)$$

$$\Delta Y = \frac{-G\,[p_{z2}(p_{x1}^2+p_{y1}^2)-p_{z1}(p_{x1}p_{x2}+p_{y1}p_{y2})]}{(p_{x1}p_{x2}+p_{y1}p_{y2}+p_{z1}p_{z2})\sqrt{p_{x1}^2+p_{y1}^2}} \sim -G\,\sin(\theta_2-\theta_1)$$

Dans le cadre de l'approximation de petits déplacements ($p_1.p_2 \to 1$), on retrouve le cas illustré par les figures 4a, 4b et 4c.

Le procédé décrit dans cette invention propose également d'exploiter la vitesse angulaire du pointeur.

La figure 7 représente le calcul des mouvements d'un curseur à partir des composantes de vitesse angulaire de l'attitude d'un pointeur projetées dans une surface plane dans un mode de réalisation de l'invention.

Par exemple, la vitesse angulaire du pointeur peut être déterminée à partir de la vitesse angulaire mesurée dans le repère du capteur.

Nous utilisons la vitesse angulaire mesurée par le capteur et recalculée grâce à l'attitude dans le repère de la terre :

$$\omega^{Earth}(t) = \begin{bmatrix} \omega_x & \omega_y & \omega_z \end{bmatrix}^T = R(t)\omega^{Sensor}(t)$$

La vitesse angulaire du pointeur peut également être déterminée à partir de la donnée de l'attitude du pointeur, par une opération de dérivation :

L'attitude du pointeur étant fournie par un quaternion $q(t)=[q_0\ q_1\ q_2\ q_3]^T$ ,la vitesse angulaire du pointeur est alors donnée par la formule :

$$\omega^{Earth}(t) = \begin{bmatrix} \omega_x & \omega_y & \omega_z \end{bmatrix}^T = 2/\mathrm{dt} * \mathrm{atan}\left(\frac{\sqrt{\dot{q}_1^2+\dot{q}_2^2+\dot{q}_3^2}}{\dot{q}_0}\right)[\dot{q}_1\ \dot{q}_2\ \dot{q}_3]^T$$

où $\dot{q} = q(t)\odot\tilde{q}(t-1)$ où $\odot$ représente le produit de quaternions et $\tilde{q}$ est le conjugué de $q$.

A partir de la vitesse angulaire du pointeur déterminée par exemple selon les principes précédents, il convient alors de déterminer le déplacement $\Delta x, \Delta y$, 731, 732 de notre curseur et d'éviter tout déplacement dû à la composante $\omega_x^{Sensor}$ . En effet, le roulis ne doit pas provoquer de déplacement de curseur, ce qui serait contre naturel.

Une première solution, illustrée par la figure 7, est de mettre à zéro $\omega_x^{Sensor}$ puis d'effectuer une transformation dans le repère lié à la terre ; on calcule alors :

- $\tilde{\omega}^{Earth}(t) = R_x(t)\omega^{Sensor}(t)$
- $\tilde{\omega}^{Earth}(t) = R_x(t)R^T(t)\omega^{Earth}(t) = \omega^{Earth}(t) - (\omega^{Earth}(t).p)p$

où $R_x$ est la même que R en remplaçant la première colonne par des zéros.

On peut alors calculer le déplacement du curseur $\Delta x, \Delta y$, 731, 732 selon n'importe quelle surface élémentaire pointée par p par les formules :

- $\Delta X = G_x Y_E^T \tilde{\omega}^{Earth}$

- $\Delta Y = G_y X_E^T \tilde{\omega}^{Earth}$

Où $G_x$ et $G_y$ sont des gains qui peuvent être une fonction de p.

Une deuxième solution, illustrée par la figure 8, est de déterminer le déplacement sur une surface élémentaire $(\Delta x, \Delta y)$ qui est prise toujours perpendiculaire au pointeur p. Alors, $X_E = Normalized([-p_y\ \ p_x\ \ 0]^T)$ et

$$Y_E = Normalized([p_x p_z \quad p_y p_z \quad -(p_x^2 + p_y^2)]^T)$$

Ce choix permet d'éliminer l'effet d'une rotation de roulis du pointeur sur le $\Delta$x et $\Delta$y parce que la surface est perpendiculaire au pointeur. Cette surface élémentaire fait partie d'une sphère centrée au pointeur. On calcule alors le déplacement du curseur $\Delta$x,$\Delta$y, 831, 832 avec les formules suivantes :

- $\Delta X = Y_E^T \omega^{Earth}$

- $\Delta Y = X_E^T \omega^{Earth}$

La figure 9 illustre une transformation possible du résultat précédent pour transformer les déplacements d'un curseur dans le modèle précédent sphérique en déplacements dans une autre surface dans un mode de réalisation de l'invention.

Notons que ce principe est général que le déplacement calculé $\Delta$x,$\Delta$y peut être par la suite transformé pour qu'il soit adapté à toute surface, par exemple pour un déplacement proportionnel à la vitesse angulaire comme illustré sur la figure 9. On utilise ainsi un modèle de surface cylindrique pour transformer $\Delta$x calculé initialement sur la sphère. Ainsi :

- $\Delta X = Y_E^T \omega^{Earth} / \sqrt{p_x^2 + p_y^2}$

- $\Delta Y = X_E^T \omega^{Earth}$

Une fois que $\omega^{Earth}$ est déterminée avec suppression de roulis on peut d'une manière équivalente transformer le déplacement sur une autre surface.

Les figures 10a et 10b illustrent des projections possibles pour transformer les positions/déplacements d'un curseur dans une surface en positions/déplacements dans une autre surface dans un mode de réalisation de l'invention.

Une fois que la position du curseur est déterminée pour une surface donnée, il est toujours possible de transformer/projeter le curseur vers une autre surface. Une transformation peut être composée d'une séquence de translations, rotations, réflexions/symétries, ou facteurs d'échelle.

Des transformations par projection perspective peuvent être également appliquées. Ces transformations permettent de projeter des surfaces de pointage en 3D sur un écran 2D de manière que la projection corresponde à la perception de l'oeil humain depuis un angle de vision. Plusieurs types de projection perspective existent, par exemple, perspective cavalière, frontale, oblique, aérienne, isométrique, géométrique descriptive, etc.

Différents outils permettent de gérer efficacement ces projections graphiques comme l'OpenGL®.

L'avantage de telles projections est de pouvoir déterminer, à partir du même pointage vers une surface 3D, le déplacement/la position du curseur sur des écrans liés à différents point de vue.

La projection n'est pas forcément orthogonale et il est possible de modifier la métrique selon le besoin. Par exemple, le déplacement donné par la vitesse angulaire ne correspond à aucune surface géométrique mais c'est une projection en perspective du déplacement sur une sphère.

Le déplacement du curseur calculé à partir de l'attitude (figures 2a, 2b, 3c, 3a, 3b, 3c, 4a, 4b, 4c, 5a, 5b, 5c, 6a, 6b, 6c) ou de la vitesse angulaire du pointeur (figures 7, 8, 9) utilise dans les deux cas le déplacement et l'orientation du pointeur.

Comme présenté précédemment, ces deux paramètres peuvent être déterminés soit :

- par une observation des deux pointeurs $p_1$ et $p_2$ (ou plus généralement de l'attitude sous forme de matrices $R_1$ et $R_2$ ou bien sous forme de quaternions $q_1$ et $q_2$) ;

- par une observation de la vitesse angulaire w et de l'attitude initiale $R_1$ / $q_1$ (ou finale $R_2$ /$q_2$) ;

Ces deux méthodes sont donc équivalentes. En effet, connaissant $p_1$ et $p_2$ on peut déterminer la vitesse angulaire $\tilde{\omega}$ supposée constante:

$$\tilde{\omega} = \text{atan}(\mathbf{p_1}, \mathbf{p_2}) * (\mathbf{p_1} \wedge \mathbf{p_2})/dt$$

Où $\wedge$ est le produit vectoriel et dt est l'intervalle de temps.

Inversement, étant donné $\tilde{\omega}$(t) et l'attitude initiale $R_1$ / $q_1$ (resp. finale $R_2$ /$q_2$), on peut déterminer le pointeur initial $p_1$ (resp. final $p_2$). Par exemple, pour $\tilde{\omega}$ constante pour un intervalle de temps dt, une rotation du pointeur $p_1$ d'un angle $||\tilde{\omega}||dt$ autour de l'axe $\tilde{\omega}$ (resp. $p_2$ d'un angle $-||\tilde{\omega}||dt$) on peut déterminer $p_2$ (resp. $p_1$)

$$\boldsymbol{p_2} = \boldsymbol{q}_\omega(t) \odot \boldsymbol{p_1} \odot \breve{\boldsymbol{q}}_\omega(t) \quad \text{resp. } \boldsymbol{p_1} = \breve{\boldsymbol{q}}_\omega(t) \odot \boldsymbol{p_2} \odot \boldsymbol{q}_\omega(t)$$

Dans tous les modes de réalisation décrits ci-dessus, le contrôle du curseur est calculé en mode relatif. Il est également possible de contrôler le curseur en mode absolu suivant les principes indiqués en commentaire à la figure 1 et détaillé ci-dessous.

Dans certains cas, il est possible de contrôler le curseur d'un écran en utilisant les coordonnés directes de l'écran. L'écran est alors repéré dans un référentiel à deux dimensions, en utilisant par exemple les coordonnés cartésiennes $(O_E, X_E, Y_E)$, les coordonnés cylindriques $(O_E, \varphi_E, Y_E)$, ou les coordonnés sphériques $(O_E, \varphi_E, \theta_E)$, ou d'autres systèmes de coordonnées.

Le choix du système de coordonnés dépend essentiellement de la nature de la surface de l'écran pointé, de manière à faciliter le repérage du curseur.

A titre d'exemple :

- Une surface plane est en pratique repérée par un système de coordonnées cartésiennes 2D ;
- Une surface cylindrique est en pratique repérée par un système de coordonnés cylindriques 2D ;
- Une surface sphérique est en pratique repérée par un système de coordonnées sphériques 2D ;
- Une surface quelconque (définie par f(x,y,z)=0, ou f($\rho,\varphi$,z)=0, ou f(r,$\varphi,\theta$)=0, etc.) est repéré par un système de coordonnées $(O_E, C_x(m), C_y(m))$ où :

  o $C_x(m)$ est une courbe paramétrée par m appartenant à f(.)=0, par exemple $C_x(m)= \{f(x,y,z)=0\} \cap \{g_x(x,y,z)=z=0\}$ est l'intersection de la surface avec le plan horizontal ;
  o $C_y(m)$ est une courbe paramétrée par m appartenant à f(.)=0, par exemple $C_y(m) = \{f(x,y,z)=0\} \cap \{g_y(x,y,z)=x=0\}$ est l'intersection de la surface avec un plan vertical.

On prend à titre purement illustratif le premier exemple d'un plan quelconque. Soit un plan quelconque défini par un repère cartésien 2D $(O_E, X_E, Y_E)$ où

- $O_E$ appartient au plan et est invariant dans le temps ;
- $X_E = [\cos(\alpha) \ \sin(\alpha) \ 0]^T$ est horizontal ($X_E$ // Plan($X_{Earth}$, $Y_{Earth}$));
- $Y_E = [-\cos(\beta)\sin(\alpha) \ \cos(\beta)\cos(\alpha) \ -\sin(\beta)]^T$ est dans un plan vertical et perpendiculaire à $X_E$.

Pour déterminer les coordonnés du curseur à l'écran en fonction du pointeur $p=[p_x \ p_y \ p_z]^T$ on utilise les formules suivantes :

$$X = \frac{(\vec{n}.\boldsymbol{O_E}) \ (\boldsymbol{p}.\dot{X_E})}{\vec{n}.\boldsymbol{p}}$$

$$Y = \frac{(\vec{n}.\boldsymbol{O_E}) \ (\boldsymbol{p}.Y_E)}{\vec{n}.\boldsymbol{p}}$$

Dans le cas d'un plan vertical, avec $O_E = [G \ 0 \ 0]^T$, $X_E = [0 \ 1 \ 0]^T$, $Y_E = [0 \ 0 \ -1]^T$, on obtient :

$$X = G\frac{p_y}{p_x}$$

$$Y = -G\frac{p_z}{p_x}$$

On prend à titre également purement illustratif, le deuxième exemple d'un cylindre vertical. Soit un cylindre quelconque défini par un repère cylindrique 2D $(O_E, \varphi_E, Y_E)$ où

- $O_E$ est au centre du cylindre
- $\varphi_E$ est l'angle dans le plan qui définit la position du curseur autour de l'axe du cylindre dans l'intervalle [0 2$\pi$] ;
- $Y_E$ = [0 0 1]$^T$ est la direction verticale du cylindre.

Pour déterminer les coordonnés du curseur à l'écran en fonction du pointeur p=[p$_x$ p$_y$ p$_z$]$^T$, on calcule alors :

$$\varphi = \mathrm{atan}(p_y/p_x)$$

$$Y = G\,\frac{p_z}{\sqrt{p_x^2 + p_y^2}}$$

On prend enfin à titre également purement illustratif, le troisième exemple d'une sphère. Soit une sphère quelconque définie par un repère sphérique 2D ($O_E$,$\varphi_E$,$Y_E$) où :

- $O_E$ est au centre de la sphère
- $\varphi_E$ est l'angle dans le plan qui définit la position du curseur sur la sphère autour de son axe vertical dans l'intervalle [0 2$\pi$] ;
- $\theta_E$ = [0 0 1]$^T$ est l'angle entre le curseur et l'axe vertical de la sphère dans l'intervalle [-$\pi$/2 -$\pi$/2] ;

Pour déterminer les coordonnés du curseur à l'écran en fonction du pointeur p=[p$_x$ p$_y$ p$_z$]$^T$, on calcule :

$$\varphi = \mathrm{atan}(p_y/p_x)$$

$$\theta = \mathrm{atan}\!\left(\frac{p_z}{\sqrt{p_x^2 + p_y^2}}\right)$$

Une fois que $\Delta x$ et $\Delta y$ sont déterminés, on a le choix de faire soit du pointage limité soit du pointage glissant, tels que définis ci-dessous.

Soit R$_1$ et R$_2$ deux repères liés à la terre dont l'origine est placée sur le pointeur. R$_1$ reste invariant et ne subit que la translation du pointeur, alors que R$_2$ subit la même rotation du pointeur dès que le curseur tend à sortir de l'écran.

Le pointage limité consiste à reproduire un pointage dans R$_1$, ainsi la région pointée ne varie pas dans l'espace.

Le pointage glissant consiste à reproduire un pointage dans R$_2$. Avec ce pointage la région pointée glisse de façon pour qu'elle reste en face du pointeur.

R$_1$ et R$_2$ peuvent être à tout moment réinitialisés.

Le curseur d'un PC est généralement alimenté en entrée par le déplacement relatif. Le pointage en limité est alors possible si et seulement si on peut récupérer la position instantanée du curseur sur l'écran. Il y a deux moyens pour récupérer les coordonnées du curseur sur l'écran.

Un premier moyen est de sommer sans aucune source d'erreur l'ensemble du déplacement du curseur à l'entrée du PC, donc :

- Il faut sommer des valeurs entières ;
- Il faut interdire à un autre pointeur (par exemple une autre souris, touch pad) de déplacer le curseur.

Un deuxième moyen est de saturer le pointeur en forçant par exemple $\Delta x$=+$\infty$,$\Delta y$=+$\infty$, ce qui met le curseur en haut à gauche. On replace ensuite le curseur sur le pixel désiré. Ce deuxième moyen est pratique pour réinitialiser le pointeur, mais il n'est pas pratiquement possible de l'utiliser en continu.

Avec un pointage limité, il est nécessaire d'avoir accès à l'attitude absolue du pointeur sans dérive. Le problème de dérive peut être réduit par une réinitialisation effectuée de temps en temps. A titre d'exemple, une procédure possible consiste à :

- calculer la somme du déplacement du curseur $\sum\Delta x$ et $\sum\Delta y$ par l'estimation d'attitude ;
- définir la dimension de l'écran par un angle solide selon le yaw et pitch ;
- il faut remettre à zéro $\Delta x$ dès que le yaw dépasse une limite, et $\Delta y$ dès que le pitch dépasse une limite ; on peut également mettre Δx et Δy à zéro dès que l'un des angles de yaw ou de pitch sort de son intervalle limite.

- Dès que l'attitude est de nouveau dans l'intervalle de l'angle solide, soit :

  ▪ on réinitialise le pointeur en utilisant la vitesse angulaire de l'orientation, selon l'attitude actuelle ;
  ▪ on poursuit le pointage après avoir accumulé l'ensemble du déplacement calculé, même lorsque l'attitude (yaw et/ou pitch) est en dehors de l'intervalle limite (∑Δx et ∑Δy sont calculés indépendamment du déplacement du curseur).

Pour reproduire un pointage absolu réaliste sur une surface donnée, il faut connaître la position/dimension et l'inclinaison/orientation de cette surface par rapport au pointeur. L'ajustement de ces paramètres peut être calibré au début. Par exemple, pour définir une écran plan, on pointe les deux extrémités de la diagonale ainsi que la normale à l'écran. Cet exemple de réalisation est avantageux pour des jeux vidéos où il faut cibler/viser sans montrer le pointeur sur l'écran.

Pour réaliser un pointage glissant tel que défini précédemment, il faut simplement alimenter le pointeur par Δx et Δy. Dans ce cas on suppose que la région pointée est affichée à l'écran. Dans le cas où le curseur sur l'écran du PC risque de déborder de l'écran, la nouvelle région pointée sera affichée à l'écran.

On peut également, dans certains cas où une dérive en yaw est présente (par exemple avec une centrale d'attitude limitée à un Accéléromètre et un Gyromètre), réaliser un pointage semi-absolu dans lequel on effectue un pointage relatif selon le yaw (φ) et un pointage absolu selon pitch (θ).

Différents modes de réalisation de l'invention peuvent être déterminés par la combinaison du mode de détermination des déplacements du curseur (par l'estimation de l'attitude ou par utilisation de la vitesse angulaire), du mode de pointage (en limité ou en glissant) et de la surface de déplacement du curseur (pointage vers une surface plane d'inclinaison donnée dans le repère terrestre, vers une surface cylindrique ou vers une sphère). Ces différentes combinaisons présentent des avantages ergonomiques pour certaines applications.

Ainsi, un pointage en absolu vers un plan est particulièrement adapté aux jeux vidéo. Un pointage en absolu vers un cylindre est bien adapté aux jeux d'entraînement exigeant rapidité et/ou réflexion. Un pointage en absolu vers une sphère peut être avantageux pour des applications de projection. L'utilisation d'un pointage en absolu vers des surfaces différentes peut être avantageux pour des exercices de simulation, par exemple à usage militaire ou pour simuler le pointage d'un spot laser sur une surface quelconque

Un pointage en glissant vers un cylindre dans lequel le déplacement du curseur est proportionnel à la vitesse de rotation du pointeur est particulièrement adapté à une application souris pour PC ou télécommande de téléviseur.

On combinera en règle générale l'utilisation de l'estimation de l'attitude avec un mode de pointage en limité et l'utilisation de la vitesse angulaire avec un mode de pointage en glissant.

On a décrit pour l'essentiel des modes de réalisation dans lesquels le pointeur a une position arbitraire dans le repère de référence. Cela nous a permis de mener les calculs analytiques complets. On peut facilement généraliser l'utilisation de l'invention lorsque le pointeur se déplace dans ledit repère. Il peut également être avantageux de changer de surface de projection au cours d'une même séquence d'utilisation lorsque le contexte de celle-ci évolue. Il peut également être avantageux de choisir des surfaces de projection différentes selon l'axe à controler, comme cela a été illustré et décrit sur la figure 9.

Les exemples décrits ci-dessus sont donnés à titre d'illustration de modes de réalisation de l'invention. Ils ne limitent en aucune manière le champ de l'invention qui est défini par les revendications qui suivent.

## Revendications

**1.** Procédé de contrôle de premiers paramètres caractérisant un curseur (101, 102) sur une surface d'affichage (100) à l'aide d'un pointeur (111, 112) mobile dans l'espace, lesdits premiers paramètres, étant choisis dans un groupe comprenant uniquement les déplacements, la position et l'orientation dudit curseur, ledit procédé comprenant une étape de détermination d'au moins un deuxième paramètre d'un premier repère lié au pointeur, ledit au moins un deuxième paramètre étant choisi dans un groupe comprenant l'attitude, la position et la vitesse angulaire dudit premier repère dans un deuxième repère lié à la surface d'affichage, un vecteur p étant lié audit premier repère, ledit procédé étant **caractérisé en ce qu'**il comprend en outre une étape de calcul desdits premiers paramètres en utilisant une ou plusieurs intersections de la droite portée par ledit vecteur p avec une surface de projection (130), ladite surface de projection (130) étant distincte de la surface d'affichage (100) et choisie de manière à prédéterminer au moins une relation de transformation entre les premiers et deuxièmes paramètres définissant au moins un domaine de variation ou une amplitude de variation desdits premiers paramètres en fonction desdits deuxièmes paramètres, ladite au moins une relation de transformation dépendant du contexte d'utilisation, ladite étape de calcul recevant en entrée au moins une partie desdits deuxièmes paramètres.

**2.** Procédé selon la revendication 1, **caractérisé en ce que** au moins une partie des premiers paramètres est calculée par une étape de description de la surface de projection (130) établie par au moins une position d'un point appartenant au plan tangent à ladite surface au point d'intersection à cette surface au point d'intersection considéré.

**3.** Procédé selon l'une des revendications 1 à 2, **caractérisé en ce que** la description de la surface de projection (130) varie en fonction de la translation du pointeur ou du contexte.

**4.** Procédé selon l'une des revendications 1 à 3, **caractérisé en ce que** la surface de projection (130) appartient au groupe des surfaces planes, des surfaces cylindriques et des surfaces sphériques.

**5.** Procédé selon la revendication 4, **caractérisé en ce que** la surface de projection (130) est une surface plane verticale et **en ce que** l'on calcule une première coordonnée, respectivement un premier déplacement, du point (120) comme étant égal(e), à une constante multiplicative près, à la tangente de l'angle de yaw du pointeur, respectivement à la différence des tangentes des angles de yaw du pointeur à la fin et au début dudit déplacement.

**6.** Procédé selon la revendication 4, **caractérisé en ce que** la surface de projection (130) est une surface plane verticale et **en ce que** l'on calcule une deuxième coordonnée, respectivement un deuxième déplacement, du point (120) comme étant égal(e), à une constante multiplicative près, au rapport de la tangente de l'angle de pitch au cosinus de l'angle de yaw du pointeur, respectivement à la différence des rapports de la tangente de l'angle de pitch au cosinus de l'angle de yaw du pointeur à la fin et au début dudit déplacement.

**7.** Procédé selon la revendication 4, **caractérisé en ce que** la surface de projection (130) est une surface cylindrique verticale et **en ce que** l'on calcule une première coordonnée, respectivement un premier déplacement, du point (120) comme étant égal(e), à une constante multiplicative près, à l'angle de yaw du pointeur en un point de la surface, respectivement à la différence des angles de yaw du pointeur à la fin et au début dudit déplacement.

**8.** Procédé selon la revendication 4, **caractérisé en ce que** la surface de projection (130) est une surface cylindrique verticale et **en ce que** l'on calcule une deuxième coordonnée, respectivement un deuxième déplacement, du point (120) comme étant égal(e), à une constante multiplicative près, à la tangente de l'angle de pitch du pointeur en un point de la surface, respectivement à la différence des tangentes des angles de pitch du pointeur à la fin et au début dudit déplacement.

**9.** Procédé selon la revendication 4, **caractérisé en ce que** la surface de projection (130) est une surface sphérique centrée sur le pointeur et **en ce que** l'on calcule une première coordonnée, respectivement un premier déplacement, du point (120) comme étant égal(e), à une constante multiplicative près, à l'angle de yaw multiplié par le cosinus de l'angle de pitch du pointeur en un point de la surface, respectivement à la différence des angles de yaw du pointeur à la fin et au début dudit déplacement multipliée par le cosinus de l'angle de pitch au début du déplacement.

**10.** Procédé selon la revendication 4, **caractérisé en ce que** la surface de projection (130) est une surface sphérique centrée sur le pointeur et **en ce que** l'on calcule une deuxième coordonnée, respectivement un deuxième déplacement du point (120) comme étant égal(e), à une constante multiplicative près, à l'angle de pitch du pointeur en un point de la surface, respectivement à la différence des angles de pitch du pointeur à la fin et au début dudit déplacement.

**11.** Procédé selon l'une des revendications 1 à 10, **caractérisé en ce que** l'on calcule l'orientation du curseur en projetant selon p un vecteur perpendiculaire au vecteur p sur ladite surface.

**12.** Procédé selon l'une des revendications 1 à 11, **caractérisé en ce que** l'on calcule la rotation d'un vecteur perpendiculaire à p en projetant l'intégrale de la vitesse angulaire selon l'axe du pointeur ou à partir de son orientation.

**13.** Procédé selon la revendication 1, **caractérisé en ce que** le calcul d'au moins une partie des premiers paramètres est effectué à partir de la vitesse angulaire du pointeur mesurée dans le premier repère et de l'attitude.

**14.** Procédé selon la revendication 13, **caractérisé en ce que** le déplacement du curseur, à deux composantes, est calculé en effectuant la projection du vecteur vitesse angulaire du pointeur, dont la composante selon le vecteur p lié au pointeur est mise à zéro, et transformé dans le deuxième repère, sur les axes (Xe, Ye) du repère définissant la surface élémentaire pour la position et orientation courante du pointeur, et multiplié par des facteurs de gain.

**15.** Procédé selon la revendication 14, caractérisé en ce le déplacement du curseur, à deux composantes, est calculé en effectuant la projection du vecteur vitesse angulaire du pointeur exprimé dans le deuxième repère, sur les axes (Xe, Ye) dudit repère définissant une surface élémentaire plane et prise perpendiculaire au vecteur p défini par le pointeur et multiplié par des facteurs de gain

**16.** Procédé selon l'une des revendications 1 à 15, **caractérisé en ce que** le pointage est réalisé en mode absolu.

**17.** Procédé selon l'une des revendications 1 à 15, **caractérisé en ce que** le pointage est réalisé en mode relatif,

**18.** Procédé selon l'une des revendications 1 à 15, **caractérisé en ce que** le pointage est réalisé en mode relatif selon une direction et en mode absolu selon une autre direction.

**19.** Système de contrôle de premiers paramètres caractérisant un curseur (120) sur une surface d'affichage (100) à l'aide d'un pointeur (110) orienté dans l'espace vers ladite surface, lesdits premiers paramètres étant choisis dans un groupe comprenant uniquement les déplacements, la position et l'orientation dudit curseur, ledit système comprenant un module de détermination de deuxièmes paramètres d'un premier repère lié au pointeur, lesdits deuxièmes paramètres étant choisis dans un groupe comprenant l'attitude, la position et la vitesse angulaire dudit premier repère dans un deuxième repère lié à la surface d'affichage; un vecteur p étant lié audit premier repère, ledit système étant **caractérisé en ce qu'**il comprend en outre un module de calcul desdits premiers paramètres en utilisant une ou plusieurs intersections de la droite portée par ledit vecteur p avec une surface de projection (130), ladite surface de projection (130) étant distincte de la surface d'affichage (100) et choisie de manière à prédéterminer au moins une relation de transformation entre les premiers et deuxièmes paramètres définissant au moins un domaine de variation ou une amplitude de variation desdits premiers paramètres en fonction desdits deuxièmes paramètres, ladite au moins une relation de transformation dépendant du contexte d'utilisation, ledit module de calcul recevant en entrée au moins une partie desdits deuxièmes paramètres.

**Patentansprüche**

**1.** Verfahren zur Steuerung von auf einer Anzeigefläche (100) einen Cursor (101, 102) kennzeichnenden ersten Parametern mittels eines räumlich beweglichen Zeigegeräts (111, 112), wobei die ersten Parameter ausgewählt sind aus einer Gruppe ausschließlich die Bewegungen, die Position und die Orientierung des Cursors umfassend, wobei das Verfahren einen Schritt zum Bestimmen mindestens eines zweiten Parameters eines ersten zeigegerätgebundenen Bezugspunktes umfasst, wobei der mindestens eine zweite Parameter ausgewählt ist aus einer Gruppe umfassend die Lage, die Position und die Winkelgeschwindigkeit des ersten Bezugspunktes in einem zweiten anzeigeflächegebundenen Bezugspunkt, wobei ein Vektor p an den ersten Bezugspunkt gebunden ist, wobei das Verfahren **dadurch gekennzeichnet ist, dass** es ferner einen Schritt zum Berechnen der ersten Parameter unter Verwendung einer oder mehrerer Schnittstellen der Geraden, getragen vom Vektor p mit einer Projektionsfläche (130) umfasst, wobei die Projektionsfläche (130) sich von der Anzeigefläche (100) unterscheidet und so ausgewählt ist, dass sie mindestens ein Transformationsverhältnis zwischen den ersten und zweiten Parametern vorgibt, die mindestens einen Variationsbereich oder eine Variationsamplitude der ersten Parameter in Abhängigkeit der zweiten Parameter definieren, wobei das mindestens eine Transformationsverhältnis vom Anwendungskontext abhängt, wobei der Schritt zum Berechnen als Eingang mindestens einen Teil der zweiten Parameter empfängt.

**2.** Verfahren nach Anspruch 1, **dadurch gekennzeichnet, dass** mindestens ein Teil der ersten Parameter durch einen Beschreibungsschritt der Projektionsfläche (130) berechnet wird, die durch mindestens eine Position eines zu der zur Fläche am Schnittpunkt mit dieser Fläche am betreffenden Schnittpunkt tangenten Ebene gehörenden Punktes festgelegt wird.

**3.** Verfahren nach einem der Ansprüche 1 bis 2, **dadurch gekennzeichnet, dass** die Beschreibung der Projektionsfläche (130) in Abhängigkeit von der Translation des Zeigegeräts oder des Kontexts variiert.

**4.** Verfahren nach einem der Ansprüche 1 bis 3, **dadurch gekennzeichnet, dass** die die Projektionsfläche (130) zur Gruppe von ebenen Flächen, zylindrischen Flächen und sphärischen Flächen gehört.

**5.** Verfahren nach Anspruch 4, **dadurch gekennzeichnet, dass** die Projektionsfläche (130) eine ebene vertikale Fläche ist, und dass man eine erste Koordinate, beziehungsweise eine erste Bewegung, des Punkts (120) als gleich, bis zu einer multiplikativen Konstante, der Tangente des Gierwinkels des Zeigegeräts, beziehungsweise der Differenz der Tangenten der Gierwinkel des Zeigegeräts am Ende und am Anfang der Bewegung berechnet.

6. Verfahren nach Anspruch 4, **dadurch gekennzeichnet, dass** die Projektionsfläche (130) eine ebene vertikale Fläche ist und dass man eine zweite Koordinate, beziehungsweise eine zweite Bewegung, des Punkts (120) als gleich, bis zu einer multiplikativen Konstante, dem Verhältnis der Tangente des Neigungswinkels zum Kosinus des Gierwinkels des Zeigegeräts, beziehungsweise der Differenz der Verhältnisse der Tangente des Neigungswinkels zum Kosinus des Gierwinkels des Zeigegeräts am Ende und am Anfang der Bewegung berechnet.

7. Verfahren nach Anspruch 4, **dadurch gekennzeichnet, dass** die Projektionsfläche (130) eine zylindrische vertikale Fläche ist und dass man eine erste Koordinate, beziehungsweise eine erste Bewegung, des Punkts (120) als gleich, bis zu einer multiplikativen Konstante, dem Gierwinkel des Zeigegeräts an einem Punkt der Fläche, beziehungsweise der Differenz der Gierwinkel des Zeigegeräts am Ende und am Anfang der Bewegung berechnet.

8. Verfahren nach Anspruch 4, **dadurch gekennzeichnet, dass** die Projektionsfläche (130) eine zylindrische vertikale Fläche ist und dass man eine zweite Koordinate, beziehungsweise eine zweite Bewegung, des Punkts (120) als gleich, bis zu einer multiplikativen Konstante, der Tangente des Neigungswinkels des Zeigegeräts an einem Punkt der Fläche, beziehungsweise der Differenz der Tangenten der Neigungswinkel des Zeigegeräts am Ende und am Anfang der Bewegung berechnet.

9. Verfahren nach Anspruch 4, **dadurch gekennzeichnet, dass** die Projektionsfläche (130) eine auf dem Zeigegerät zentrierte sphärische Ebene ist und dass man eine erste Koordinate, beziehungsweise eine erste Bewegung, des Punkts (120) als gleich, bis zu einer multiplikativen Konstante, dem Gierwinkel multipliziert mit dem Kosinus des Neigungswinkels des Zeigegeräts an einem Punkt der Fläche, beziehungsweise der Differenz der Gierwinkel des Zeigegeräts am Ende und am Anfang der Bewegung multipliziert mit dem Kosinus des Neigungswinkels am Anfang der Bewegung berechnet.

10. Verfahren nach Anspruch 4, **dadurch gekennzeichnet, dass** die Projektionsfläche (130) eine auf dem Zeigegerät zentrierte sphärische Fläche ist und dass man eine zweite Koordinate, beziehungsweise eine zweite Bewegung des Punkts (120) als gleich, bis zu einer multiplikativen Konstante, dem Neigungswinkel des Zeigegeräts an einem Punkt der Fläche, beziehungsweise der Differenz der Neigungswinkel des Zeigegeräts am Ende und am Anfang der Bewegung berechnet.

11. Verfahren nach einem der Ansprüche 1 bis 10, **dadurch gekennzeichnet, dass** man die Orientierung des Cursors berechnet, indem man entlang p einen Vektor senkrecht zum Vektor p auf die Fläche projiziert.

12. Verfahren nach einem der Ansprüche 1 bis 11, **dadurch gekennzeichnet, dass** man die Drehung eines zu p senkrechten Vektors berechnet, indem das Integral der Winkelgeschwindigkeit entlang der Achse des Zeigegeräts ausgehend von seiner Orientierung projiziert.

13. Verfahren nach Anspruch 1, **dadurch gekennzeichnet, dass** die Berechnung mindestens eines Teils der ersten Parameter ausgehend von der Winkelgeschwindigkeit des Zeigegeräts, gemessen im ersten Bezugspunkt, und der Lage durchgeführt wird.

14. Verfahren nach Anspruch 13, **dadurch gekennzeichnet, dass** die Bewegung des Cursors, mit zwei Komponenten, berechnet wird durch Projizieren des Vektors Winkelgeschwindigkeit des Zeigegeräts, dessen Komponente gemäß Vektor p, gebunden an das Zeigegerät, auf Null gesetzt und an dem zweiten Bezugspunkt, auf den Achsen (Xe, Ye) des Bezugspunktes, der die Grundfläche für die Position und derzeitige Orientierung des Zeigegeräts definiert, transformiert und mit Verstärkungsfaktoren multipliziert wird.

15. Verfahren nach Anspruch 14, **dadurch gekennzeichnet, dass** die Bewegung des Cursors, mit zwei Komponenten, berechnet wird durch Projizieren des Vektors Winkelgeschwindigkeit des Zeigegeräts, ausgedrückt im zweiten Bezugspunkt, auf die Achsen (Xe, Ye) des Bezugspunktes, der eine ebene und zum Vektor p, definiert durch das Zeigegerät und multipliziert mit Verstärkungsfaktoren, senkrecht genommene Grundfläche definiert.

16. Verfahren nach einem der Ansprüche 1 bis 15, **dadurch gekennzeichnet, dass** der Zeigevorgang im Absolutmodus erfolgt.

17. Verfahren nach einem der Ansprüche 1 bis 15, **dadurch gekennzeichnet, dass** der Zeigevorgang im Relativmodus erfolgt.

18. Verfahren nach einem der Ansprüche 1 bis 15, **dadurch gekennzeichnet, dass** der Zeigevorgang im Relativmodus gemäß einer Richtung und im Absolutmodus gemäß einer anderen Richtung erfolgt.

19. System zur Steuerung von auf einer Anzeigefläche (100) einen Cursor (120) kennzeichnenden ersten Parametern mittels eines zur Fläche räumlich orientierten Zeigegeräts (110), wobei die ersten Parameter ausgewählt sind aus einer Gruppe, ausschließlich die Bewegungen, die Position und die Orientierung des Cursors umfassend, wobei das System ein Modul zum Bestimmen von zweiten Parametern eines ersten zeigegerätgebundenen Bezugspunktes umfasst, wobei die zweiten Parameter ausgewählt sind aus der Gruppe umfassend die Lage, die Position und die Winkelgeschwindigkeit des ersten Bezugspunktes in einem zweiten anzeigeflächegebundenen Bezugspunkt; wobei ein Vektor p an den ersten Bezugspunkt gebunden ist, wobei das System **dadurch gekennzeichnet ist, dass** es ferner ein Modul zum Berechnen der ersten Parameter unter Verwendung einer oder mehrerer Schnittstellen der Geraden, getragen vom Vektor p, mit einer Projektionsfläche (130) umfasst, wobei die Projektionsfläche (130) sich von der Anzeigefläche (100) unterscheidet und so ausgewählt ist, dass sie mindestens ein Transformationsverhältnis zwischen den ersten und zweiten Parametern vorgibt, die mindestens einen Variationsbereich oder eine Variationsamplitude der ersten Parameter in Abhängigkeit der zweiten Parameter definieren, wobei das mindestens eine Transformationsverhältnis vom Anwendungskontext abhängt, wobei das Modul zum Berechnen als Eingabe mindestens einen Teil der zweiten Parameter empfängt.

**Claims**

1. A method of controlling first parameters characterising a cursor (101, 102) on a display surface (100) with the aid of a pointer (111, 112) moving in space, said first parameters being chosen from a group comprising purely displacements, position and orientation of said cursor, said method comprising a step of determining at least one second parameter of a first reference frame tied to the pointer, said at least one second parameter being chosen from a group comprising attitude, position and angular velocity of said first reference frame in a second reference frame tied to the display surface, a vector p being tied to said first reference frame, said method being **characterised in that** it further comprises a step of calculating said first parameters by using one or more intersections of a straight line carried by said vector p with a projection surface (130), said projection surface (130) being distinct from the display surface (100) and being chosen such as to predetermine at least a transformation relationship between the first and second parameters defining at least a variation domain or a variation amplitude of said first parameters as a function of said second parameters, said at least one transformation relationship depending upon a context of use, said calculation step receiving as input at least some of said second parameters.

2. The method according to Claim 1, **characterised in that** at least some of the first parameters are calculated by a step of describing the projection surface (130) established by at least one position of a point belonging to a plane tangent to said surface at a point of intersection with this surface at the point of intersection considered.

3. The method according to either of Claims 1 to 2, **characterised in that** the description of the projection surface (130) varies as a function of a translation of the pointer or of a context.

4. The method according to any of Claims 1 to 3, **characterised in that** the projection surface (130) belongs to a group of planar surfaces, cylindrical surfaces and spherical surfaces.

5. The method according to Claim 4, **characterised in that** the projection surface (130) is a vertical planar surface and **in that** a first coordinate, respectively a first displacement, of the point (120) is calculated as being equal within a multiplicative constant, to the tangent of the angle of yaw of the pointer, respectively to the difference between the tangents of the angles of yaw of the pointer at the end and at the start of said displacement.

6. The method according to Claim 4, **characterised in that** the projection surface (130) is a vertical planar surface and **in that** a second coordinate, respectively a second displacement, of the point (120) is calculated as being equal, to a constant times the ratio of the tangent of the angle of pitch to the cosine of the angle of yaw of the pointer, respectively the difference between the ratios of the tangent of the angle of pitch to the cosine of the angle of yaw of the pointer at the end and at the start of said displacement.

7. The method according to Claim 4, **characterised in that** the projection surface (130) is a vertical cylindrical surface and **in that** a first coordinate, respectively a first displacement, of the point (120) is calculated as being equal to a constant times the angle of yaw of the pointer at a point of the surface, respectively the difference of the angles of yaw of the pointer at the end and at the start of said displacement.

8. The method according to Claim 4, **characterised in that** the projection surface (130) is a vertical cylindrical surface and **in that** a second coordinate, respectively a second displacement, of the point (120) is calculated as being equal to a constant times the tangent of the angle of pitch of the pointer at a point of the surface, respectively the difference of the tangents of the angles of pitch of the pointer at the end and at the start of said displacement.

9. The method according to Claim 4, **characterised in that** the projection surface (130) is a spherical surface centred on the pointer, and **in that** a first coordinate, respectively a first displacement, of the point (120) is calculated as being equal to a constant times the angle of yaw multiplied by the cosine of the angle of pitch of the pointer at a point of the surface, respectively the difference between the angles of yaw of the pointer at the end and at the start of said displacement, multiplied by the cosine of the angle of pitch at the start of the displacement.

10. The method according to Claim 4, **characterised in that** the projection surface (130) is a spherical surface centred on the pointer and **in that** a second coordinate, respectively a second displacement of the point (120) is calculated as being equal to a constant times the angle of pitch of the pointer at a point of the surface, respectively the difference between the angles of pitch of the pointer at the end and at the start of said displacement.

11. The method according to any of Claims 1 to 10, **characterised in that** the orientation of the cursor is calculated by projecting, along p, a vector perpendicular to vector p on said surface.

12. The method according to any of Claims 1 to 11, **characterised in that** the rotation of a vector perpendicular to p is calculated either by projecting an integral of the angular velocity along the axis of the pointer or by using its orientation.

13. The method according to Claim 1, **characterised in that** the calculation of at least some of the first parameters is performed based on the angular velocity and the attitude of the pointer measured in the first reference frame.

14. The method according to Claim 13, **characterised in that** the displacement of the cursor, having two components, is calculated by projecting the angular velocity vector of the pointer, the component of which along vector p tied to the pointer is set to zero, said displacement being transformed in the second reference frame, the projecting onto the axes (Xe, Ye) of the reference frame defining an elementary surface for the position and current orientation of the pointer, said displacement being multiplied by gain factors.

15. The method according to Claim 14, **characterised in that** the displacement of the cursor, having two components, is calculated by projecting the angular velocity vector of the pointer expressed in the second reference frame onto the axes (Xe, Ye) of said reference frame defining a planar elementary surface perpendicular to the vector p defined by the pointer, said displacement being multiplied by gain factors.

16. The method according to any of Claims 1 to 15, **characterised in that** the pointing is carried out in an absolute mode.

17. The method according to any of Claims 1 to 15, **characterised in that** the pointing is carried out in a relative mode.

18. The method according to any of Claims 1 to 15, **characterised in that** the pointing is carried out in a relative mode in one direction and in an absolute mode in another direction.

19. A system for controlling first parameters characterising a cursor (120) on a display surface (100) with the aid of a pointer (110) orientated in space toward said surface, said first parameters being chosen from a group comprising purely displacements, position and orientation of said cursor, said system comprising a module for determining second parameters of a first reference frame tied to the pointer, said second parameters being chosen from a group comprising attitude, position and angular velocity of said first reference frame in a second reference frame tied to the display surface; a vector p being tied to said first reference frame, said system being **characterised in that** it further comprises a module for calculating said first parameters by using one or more intersections of a straight line carried by said vector p with a projection surface (130), said projection surface (130) being distinct from the display surface (100) and chosen such as to predetermine at least one transformation relationship between the first and second parameters defining at least a variation domain or a variation amplitude of said first parameters as a function of said second parameters, said at least one transformation relationship depending on a context of use, said calculation module receiving as input at least some of said second parameters.

100

102
102A
$\Delta y_A$
101A
2
$\Delta x_A$
1
101

Conversion
130→100

(101,102)
ou (101A,102A)

150

(121,122)
ou (131,132)

$x_{Earth}$
$z_{Earth}$
$y_{Earth}$

131
122
$p_2$
112
$r_1$
$\Delta x$
$p_1$
111
130
141
121
132
$\Delta y$

FIG.1

FIG.2a

FIG.2b

FIG.2c

FIG.3a

FIG.3b

FIG.3c

FIG.4a

FIG.4b

FIG.4c

FIG.5a

FIG.5b

FIG.5c

FIG.6a

FIG.6b

FIG.6c

FIG.7

FIG.8

FIG.9

FIG.10a

FIG.10b

## RÉFÉRENCES CITÉES DANS LA DESCRIPTION

**Documents brevets cités dans la description**

- US 5440326 A
- US 5598187 A, Ide
- US 7158118 B
- WO 2009156476 A, Mathews
- WO 2009156499 A
- US 2004070564 A
- US 7102616 B
- US 5880733 A
- WO 2010007160 A